# EUROPÄISCHE PATENTSCHRIFT

(11) **EP 4 113 786 B1**
(45) Veröffentlichungstag und Bekanntmachung des Hinweises auf die Patenterteilung: **03.06.2026**
(21) Anmeldenummer: 22181016.1
(22) Anmeldetag: 24.06.2022
(51) Int. Cl.: H02J 50/10, H02J 7/42

(54) **VERFAHREN, GERÄT UND LADEGERÄT**
METHOD, DEVICE AND CHARGER
PROCÉDÉ, APPAREIL ET CHARGEUR

(30) Priorität: 28.06.2021 DE 102021206657
(43) Veröffentlichungstag der Anmeldung: 04.01.2023
(73) Patentinhaber: Sivantos Pte. Ltd., Singapore 539775 (SG)
(72) Erfinder: NARAMPANAWE, Nishshanka Bandara, 649491 Singapore (SG); YAP, Heng Goh, 338521 Singapore (SG); LER, Gee Heng, 10150 Georgetown, Penang (MY); RATHNAYAKA MUDIYANSELAGE, Sooriya Bandara, 738968 Singapore (SG); ONG, Chuan En Andrew, 680157 Singapore (SG)
(74) Vertreter: FDST Patentanwälte

(56) Entgegenhaltungen:
- US-A1- 2016 308 386

## Beschreibung

Die Erfindung betrifft ein Verfahren, ein Gerät und ein Ladegerät.

Unter "Gerät" wird vorliegend ein mobiles Gerät verstanden, das Gerät ist somit allgemein transportabel und verfügt über einen eigenen Energiespeicher zur Energieversorgung. Das Gerät ist regelmäßig einem einzelnen Nutzer zugeordnet und gegebenenfalls sogar individuell auf diesen abgestimmt. Der Energiespeicher ist regelmäßig eine Sekundärzelle (z.B. Lithium-Akku), welche durch Verbinden des mobilen Geräts mit einem Ladegerät aufladbar ist. Hierzu wird das Gerät mit dem Ladegerät kontaktgebunden oder drahtlos verbunden, um Energie vom Ladegerät an das Gerät zu übertragen und mit dieser Energie dann das Gerät, genauer dessen Energiespeicher, zu laden.

Ein spezielles Beispiel für ein Gerät ist ein Hörgerät, welches zur Versorgung eines Nutzers dient, welcher/welche ein Hördefizit aufweist. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird. Anstelle des Mikrofons und des Hörers sind je nach Hörgerätetyp auch andere Eingangs- und/oder Ausgangswandler möglich. Das Hörgerät ist binaural oder monaural ausgebildet, d.h. zur Verwendung auf beiden Seiten beziehungsweise lediglich einer Seite des Kopfes des Nutzers.

Andere Beispiele für Geräte sind Kopfhörer, Headsets, Wearables, Smartphones und ähnliche Geräte.

Während des Ladens ist das Gerät in einem Ladezustand. Nach dem Laden und obwohl das Gerät noch mit dem Ladegerät verbunden ist, wird das Gerät typischerweise eingeschaltet und wechselt in einen Entladezustand oder das Ladegerät überträgt weiterhin Energie, um ein Umschalten in den Entladezustand zu verhindern. In beiden Fällen wird nachteilig Energie verbraucht.

Es wird verweisen auf US 2016/308386 A1.

Vor diesem Hintergrund ist es eine Aufgabe der Erfindung, den Energieverbrauch nach dem Laden zu reduzieren. Hierzu sollen ein geeignetes Verfahren, ein Gerät sowie ein Ladegerät angegeben werden.

Die Aufgabe wird erfindungsgemäß gelöst durch ein Verfahren mit den Merkmalen gemäß Anspruch 1 sowie ein Gerät und ein Ladegerät mit den Merkmalen gemäß Anspruch 13. Vorteilhafte Ausgestaltungen, Weiterbildungen und Varianten sind Gegenstand der Unteransprüche. Die Ausführungen im Zusammenhang mit dem Verfahren gelten sinngemäß auch für das Gerät und das Ladegerät sowie umgekehrt. Sofern nachfolgend Schritte des Verfahrens beschrieben sind, ergeben sich vorteilhafte Ausgestaltungen für das Gerät und das Ladegerät jeweils dadurch, dass diese ausgebildet einen oder mehrere der Schritte durchzuführen, insbesondere mittels einer jeweiligen Steuereinheit in dem Gerät beziehungsweise Ladegerät.

Bei dem Verfahren ist ein Gerät mit einem Ladegerät verbunden und in einem Ladezustand erfolgt ein drahtloses Laden, indem mit einem Sendemodul des Ladegeräts an ein Empfangsmodul des Geräts drahtlos Energie übertragen wird. Beim Laden ist das Gerät ausgeschaltet und befindet sich in dem Ladezustand. Das Gerät weist einen Ladeanschluss auf, an welchem zum Laden eine Ladespannung V_{cc} anliegt, welche mit dem Ladegerät einstellbar ist. Weiter weist das Gerät einen Schaltanschluss auf, zum Ein- und Ausschalten des Geräts. Der Ladeanschluss und der Schaltanschluss sind vorzugsweise Anschlüsse eines Energiemanagementmoduls (auch als PMIC bezeichnet) des Geräts. Das Energiemanagementmodul nimmt die Ladespannung entgegen und lädt damit einen Energiespeicher, z.B. Lithium-Akku, des Geräts.

Das Gerät weist auch einen Entladezustand auf, in welchem Energie verbraucht wird, nämlich von einem oder mehreren Verbrauchern des Geräts. Im Entladezustand steuert das Energiemanagementmodul die Bereitstellung von Energie für die Verbraucher aus dem Energiespeicher des Geräts. Im Ladezustand empfängt das Gerät somit Energie vom Ladegerät, im Entladezustand verbraucht das Gerät Energie. Im Ladezustand ist das Gerät notwendigerweise mit dem Ladegerät verbunden, im Entladezustand ist das Gerät entweder vom Ladegerät getrennt oder mit diesem verbunden. Unter "das Gerät ist eingeschaltet" wird verstanden, dass die Verbraucher insbesondere mittels des Energiemanagementmoduls mit Energie versorgt werden, unter "das Gerät ist ausgeschaltet" wird dann verstanden, dass die Verbraucher nicht mit Energie versorgt werden, gleichwohl kann das Energiemanagementmodul weiterhin Energie verbrauchen. Im Entladezustand ist das Gerät prinzipbedingt auch eingeschaltet. Sofern nachfolgend beschrieben wird, dass das Gerät "ausgeschaltet wird", wird darunter verstanden, dass das Gerät erstens, falls es eingeschaltet ist, "ausgeschaltet wird", und zweitens, falls das Gerät bereits ausgeschaltet ist, "ausgeschaltet bleibt".

Das Gerät weist außerdem einen Schalter auf, welcher mit dem Schaltanschluss verbunden ist und welcher mit der Ladespannung schaltbar ist, indem die Ladespannung auf eine Zwischenspannung eingestellt wird. Der Schalter ist insbesondere ein Teil einer Ausschalt-Schaltung des Geräts. Das Ladegerät stellt die Ladespannung auf die Zwischenspannung ein, sodass der Schalter geschaltet wird und das Gerät in einen Aus-Zustand wechselt, in welchem das Gerät ausgeschaltet ist. Darunter wird insbesondere verstanden: Das Gerät wird (d.h. wird oder bleibt) mittels des Ladegeräts ausgeschaltet, indem das Ladegerät die Ladespannung auf die Zwischenspannung einstellt, sodass der Schalter geschaltet wird und das Gerät in einen Aus-Zustand wechselt. Dies, d.h. das Einstellen der Zwischenspannung und der darauffolgende Wechsel in den Aus-Zustand, erfolgt insbesondere beim Beenden oder Unterbrechen des Ladens, kann aber grundsätzlich auch allgemein in einem Fehlerfall erfolgen, z.B. bei Überhitzung oder Überspannung/Überstrom des Energiespeichers. Damit wird mit dem Ladegerät ein automatisches Ausschalten realisiert, sobald keine Energie mehr an das Gerät übertragen wird. Das Ladegerät initiiert damit einen Wechsel des Geräts in den Aus-Zustand, in welchem das Gerät dann - anders als im Entladezustand - keine Energie mehr verbraucht. Hierbei nutzt das Ladegerät die Möglichkeit, die Ladespannung variabel einzustellen. Durch das automatische Ausschalten wird somit nach dem Laden vorteilhaft Energie gespart, da das Gerät ausgeschaltet wird und somit gerade nicht in den Entladezustand wechselt.

Das Gerät ist ein mobiles Gerät und somit allgemein transportabel. Das Gerät ist regelmäßig einem einzelnen Nutzer zugeordnet und gegebenenfalls sogar individuell auf diesen abgestimmt. Der Energiespeicher ist regelmäßig eine Sekundärzelle (z.B. Lithium-Akku), welche durch Verbinden des Geräts mit dem Ladegerät aufladbar ist.

Bevorzugterweise ist das Gerät ein Hörgerät, welches zur Versorgung eines Nutzers dient, welcher/welche ein Hördefizit aufweist. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Modifikation erfolgt insbesondere anhand eines individuellen Audiogramms des Nutzers, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird. Anstelle des Mikrofons und des Hörers sind je nach Hörgerätetyp auch andere Eingangs- und/oder Ausgangswandler möglich. Das Hörgerät ist binaural oder monaural ausgebildet, d.h. zur Verwendung auf beiden Seiten beziehungsweise lediglich einer Seite des Kopfes des Nutzers. Eingangswandler (z.B. Mikrofon), Ausgangswandler (z.B. Hörer), Signalverarbeitung sind Verbraucher des Geräts.

Alternativ ist das Gerät ein Kopfhörer, Headset, Wearable, Smartphone oder dergleichen.

Zum Laden wird das Gerät mit dem Ladegerät verbunden und hierzu geeigneterweise in dieses eingelegt, eingesetzt oder auf dieses aufgelegt. Beispielsweise ist das Ladegerät als Ladeschale ausgebildet, mit einer Vertiefung, in welche das Gerät einlegbar ist. Optional weist das Ladegerät einen Deckel auf, um das Ladegerät zu verschließen und dabei die Vertiefung zu verdecken, sodass das Gerät insgesamt im Inneren des Ladegeräts eingeschlossen ist. Die Vertiefung ist zweckmäßigerweise derart geformt, dass das Gerät darin in einer möglichst definierten Anordnung relativ zur Ladeschale gehalten ist.

Je nachdem, welche Ladung der Energiespeicher aufweist, d.h. wie voll der Energiespeicher geladen ist, stellt dieser für einen oder mehrere Verbraucher eine Spannung V_{bat} bereit, welche gegebenenfalls zuvor noch mit einer Transformationseinheit transformiert wird, z.B. im Energiemanagementmodul, sodass dieses dann eine Spannung Vₒᵤₜ an die Verbraucher ausgibt. Je größer die Ladung, desto größer ist diese Spannung typischerweise. Das Gerät wird vom Ladegerät mit einer Ladespannung V_{cc} (d.h. "charging input voltage") geladen, wobei die Ladespannung diejenige Spannung ist, welche im Gerät zum Laden des Energiespeichers vorliegt. Der Energiespeicher wird dann solange geladen, bis die gewünschte Ladung oder Spannung erreicht ist. Hierzu wird geeigneterweise eine Ladeschwellenspannung V_{chg,thres} (d.h. "charging threshold voltage") vorgegeben, welche mit der Ladespannung verglichen wird, um festzulegen, wann geladen wird und wann nicht. Vorzugsweise wird das Laden dann beendet, wenn die Ladespannung die Ladeschwellenspannung unterschreitet. Die Ladeschwellenspannung ist beispielsweise eine fest vorgegebene Spannung.

Um das Gerät auszuschalten (d.h. das Gerät wird oder bleibt ausgeschaltet), nachdem dieses vollständig aufgeladen wurde, ist ein automatisches Ausschalten (d.h. "automatic switch-off") vorteilhaft. Das automatische Ausschalten wird dabei vorliegend zwar vom Gerät selbst durchgeführt, von diesem jedoch nicht selbst initiiert, sondern vom Ladegerät, sodass das automatische Ausschalten genauer gesagt ein "extern veranlasstes, automatisches Ausschalten" ist. Das Ladegerät bestimmt, wann das Gerät ausgeschaltet werden soll und sendet dann ein Ausschaltsignal an das Gerät, sodass dieses ausgeschaltet wird. Vorliegend führt das Ausschaltsignal dazu, dass im Gerät die Zwischenspannung vorliegt. Ohne ein automatisches Ausschalten würde fortlaufend auch nach dem Laden das Gerät eingeschaltet und Energie verbraucht, insbesondere wenigstens vom Energiemanagementmodul zu dessen Betrieb. Selbst wenn der hierbei verwendete Strom typischerweise lediglich gering ist, so wird dennoch vom Gerät Energie verbraucht. Diese Energie wird weiterhin gegebenenfalls auch dem Ladegerät entnommen, während dieses nach dem eigentlichen Laden noch mit dem Gerät verbunden ist. Speziell bei einem portablen Ladegerät mit einem eigenen Energiespeicher würde dieser Energiespeicher fortlaufend vom Gerät entladen, insbesondere, um das Gerät daran zu hindern, sich einzuschalten und in den Entladezustand zu wechseln. Außerdem existieren regelmäßig Spezifikationen, welche sicherstellen sollen, dass ein Gerät mit anderen Geräten kompatibel ist. Eine solche Spezifikation ist beispielsweise "Made for iPhone/iPod/iPad", kurz MFi. Beispielsweise fordert eine Spezifikation, dass eine BLE-Funktion (BLE = Bluetooth Low Energy) des Geräts ausgeschaltet ist und das Gerät somit nicht in einem Kopplungsmodus oder einem Anbietemodus betrieben wird, solange das Gerät mit dem Ladegerät verbunden ist und solange keine explizite Nutzereingabe zum Einschalten der BLE-Funktion erfolgt. Hinsichtlich des Kopplungsmodus fordert die Spezifikation demnach, dass das Gerät, während dieses mit dem Ladegerät verbunden ist, nicht mit einem anderen Gerät koppelbar sein soll. Hinsichtlich des Anbietemodus fordert die Spezifikation dann, dass das Gerät, während dieses mit dem Ladegerät verbunden ist, kein Bereitschaftssignal (zum Anzeigen der eigenen Bereitschaft zur Kopplung) an andere Geräte aussenden soll.

Einige Szenarien führen jedoch möglicherweise dazu, dass das Gerät nach dem Laden, aber noch während dieses Gerät mit dem Ladegerät verbunden ist, eingeschaltet wird oder ist und somit im Entladezustand betrieben wird, in welchem dann entgegen der Spezifikation auch die BLE-Funktion eingeschaltet ist. Ein erstes solches Szenario ist ein Stromausfall, bei welchem eine Energieversorgung des Ladegeräts unterbrochen wird. Ein zweites Szenario ist ein Entfernen eines Stromkabels des Ladegeräts, wobei das Kabel das Ladegerät mit einem Stromnetz verbindet, z.B. über eine Haushaltssteckdose. Das zweite Szenario ist im Grunde ähnlich dem ersten Szenario. Ein drittes Szenario ist, dass ein Energiespeicher eines portablen Ladegeräts vollständig entladen ist, sodass das Ladegerät keine Energie mehr zum Laden für das Gerät zur Verfügung stellen kann. In all diesen Szenarien wird keine Energie mehr an das Gerät übertragen und daher das Gerät typischerweise in den Entladezustand versetzt. Als Folge davon ist das Gerät eingeschaltet, anstatt ausgeschaltet. Entsprechend sind dann auch energieverbrauchende Funktionen, wie z.B. die BLE-Funktion eingeschaltet.

Allgemein, speziell jedoch wegen der Spezifikation wie beschrieben, ist es somit wünschenswert, nach dem Laden das Gerät auszuschalten, solange dieses noch mit dem Ladegerät verbunden ist. Das Gerät soll beim Beenden des Ladezustands möglichst nicht in den Entladezustand versetzt und eingeschaltet werden, sondern das Gerät soll ausgeschaltet werden.

Zur Erfüllung der Spezifikation ist es vorteilhaft, den Ladeanschluss des Energiemanagementmoduls des Geräts zu verwenden, um ein automatisches Ausschalten zu realisieren und dadurch das Gerät nach dem Laden auszuschalten. Der Ladeanschluss ist ein elektrischer Kontakt, z.B. ein Kontaktpin, über welchen das Gerät mit dem Ladegerät zum Laden verbunden ist und somit beim kontaktgebundenen Laden auch galvanisch gekoppelt ist. Am Ladeanschluss liegt die Ladespannung an, der Ladeanschluss ist somit allgemein ein Leistungskontakt. Auch der Schaltanschluss ist z.B. als Kontaktpin ausgebildet. Der Schaltanschluss ist insbesondere mit einem Pull-Up-Widerstand hochgezogen. Zwischen dem Schaltanschluss und Masse ist zum manuellen Ausschalten des Geräts zweckmäßigerweise ein Schalter angeschlossen, welcher manuell betätigbar ist. Zum automatischen Ausschalten mittels des Ladegeräts weist das Gerät unabhängig davon dann die bereits genannte Ausschalt-Schaltung mit Schalter auf, welche den Ladeanschluss und den Schaltanschluss nutzt. Der Schalter ist vorzugsweise ein Transistor, mit Gate, Source und Drain, d.h. mit entsprechenden Anschlüssen. Die Begriffe Gate, Drain und Source werden hier und nachfolgend zur Bezeichnung der drei Anschlüsse des Transistors verwendet. Die Ausführungen gelten jedoch ganz allgemein für jeden Schalter mit drei Anschlüssen, welche Gate, Source und Drain eines Transistors funktional gleichwertig sind. Das Gate des Transistors ist mit dem Ladeanschluss und mit einem Widerstand der Ausschalt-Schaltung auf die Ladespannung hochgezogen. Der Widerstand verbindet das Gate mit der Source und mit Masse. Der Drain und die Source des Transistors sind mit dem Schaltanschluss beziehungsweise mit Masse verbunden.

Ganz allgemein und speziell mittels der Ausschalt-Schaltung wie oben beschrieben, ist mit dem automatischen Ausschalten vorteilhaft ein zusätzlicher Betriebszustand für das Gerät realisiert, nämlich der Aus-Zustand, in welchem das Gerät zwar an das Ladegerät angeschlossen ist, dabei jedoch ausgeschaltet ist und damit weder selbst Energie verbraucht, noch Energie vom Ladegerät empfängt. Demgegenüber ist das Gerät im Ladezustand ausgeschaltet, empfängt dabei aber noch Energie (insbesondere zum Betrieb des Energiemanagementmoduls), und im Entladezustand eingeschaltet und verbraucht Energie. Zum Wechseln zwischen dem Ladezustand und dem Entladezustand (in beiden Richtungen) weist das Gerät zusätzlich insbesondere noch einen Wartezustand (d.h. "idle state") auf, sodass insgesamt vier Betriebszustände möglich sind, welche sich insbesondere auch gegenseitig ausschließen.

Das Gerät wechselt vorzugsweise dann vom Entladezustand, vom Aus-Zustand oder vom Wartezustand in den Ladezustand, wenn die Ladespannung wenigstens der Ladeschwellenspannung entspricht. Solange die Ladespannung wenigstens der Ladeschwellenspannung entspricht bleibt der Ladezustand aktiv. Das Gerät wechselt vom Ladezustand in den Wartezustand, wenn die Ladespannung geringer ist als die Ladeschwellenspannung. Das Gerät wechselt vom Wartezustand in den Entladezustand, wenn die Ladespannung geringer ist als eine Reset-Spannung Vᵣₛₜ und zusätzlich insbesondere, wenn auch eine Zeit verstrichen ist, welche länger ist als eine Entladezeit t_{disc}. Die Reset-Spannung ist beispielsweise eine fest vorgegebene Spannung und insbesondere ein Parameter des Energiemanagementmoduls. Die Reset-Spannung dient insbesondere dazu, den Betrieb des Energiemanagementmoduls zu stoppen und dieses auf einen vordefinierten Standardzustand zu initialisieren, indem am Energiemanagementmodul eine Spannung angelegt wird, welche wenigstens der Reset-Spannung entspricht. Diese Initialisierung ermöglicht dann nachfolgend einen ordnungsgemäßen Betrieb. Die Reset-Spannung wird vorliegend insbesondere auch genutzt, um festzulegen, wann vom Wartezustand in den Entladezustand gewechselt wird. Die Entladezeit ist beispielsweise eine fest vorgegebene Zeit von wenigen Sekunden. Umgekehrt wechselt das Gerät vom Entladezustand in den Wartezustand, wenn die Ladespannung geringer ist als die Ladeschwellenspannung und größer als die Reset-Spannung, und vom Wartezustand in den Ladezustand, wenn die Ladespannung wenigstens der Ladeschwellenspannung entspricht. Solange die Ladespannung geringer ist als die Ladeschwellenspannung, bleibt der Wartezustand aktiv.

Das automatische Ausschalten, d.h. ein Wechsel in den Aus-Zustand, ist nun dadurch realisiert, dass die Ladespannung am Ladeanschluss auf eine Zwischenspannung eingestellt wird, welche eine Gate-Source-Schwellenspannung V_{gs-thres} des Transistors ist und zweckmäßigerweise zwischen der Reset-Spannung und einer Gate-Source-Mindestschwellenspannung, d.h. einem Mindestwert für die Gate-Source-Schwellenspannung, liegt. Die Gate-Source-Schwellenspannung ist diejenige Spannung, welche zum Schalten (insbesondere Einschalten) des Transistors erforderlich ist und liegt insbesondere in einem Bereich zwischen der Gate-Source-Mindestschwellenspannung (diejenige Spannung, welche wenigstens zum Schalten des Transistors nötig ist) und einer Gate-Source-Maximalschwellenspannung (diejenige Spannung, welche höchstens zum Schalten des Transistors möglich ist). Die Reset-Spannung ist insbesondere größer als die tatsächlich genutzte Gate-Source-Schwellenspannung, die Gate-Source-Maximalschwellenspannung kann jedoch größer sein als die Reset-Spannung. Zweckmäßigerweise weist der Transistor eine möglichst große Differenz zwischen der Gate-Source-Mindestschwellenspannung und der Gate-Source-Maximalschwellenspannung auf. Die Gate-Source-Maximalschwellenspannung beträgt beispielsweise 20 V.

Durch die Gate-Source-Mindestschwellenspannung einerseits und die Reset-Spannung andererseits ist nun für die Zwischenspannung ein Spannungsbereich aufgespannt, welcher zum Wechseln in den Aus-Zustand genutzt wird. Wenn die Ladespannung geringer ist als die Reset-Spannung, wechselt das Gerät in den Entladezustand. Grundsätzlich ist zunächst der Entladezustand solange aktiv, wie die Ladespannung geringer ist als die Gate-Source-Mindestschwellenspannung. Das Gerät wechselt dann in den Aus-Zustand, wenn die Ladespannung geringer ist als die Reset-Spannung und größer als die Ladeschwellenspannung, und zusätzlich insbesondere, wenn auch eine Zeit (während welcher die Zwischenspannung gehalten wird) verstrichen ist, welche länger ist als eine Schaltanschluss-Aktiv-Zeit t_{sca}. Entsprechend wird dann, sobald am Gate des Transistors die Zwischenspannung erreicht ist, der Transistor geschaltet und der Schaltanschluss auf Masse gezogen. Das Gerät wechselt kurzzeitig in den Entladezustand und von dort aus in den Aus-Zustand, insbesondere nach der Schaltanschluss-Aktiv-Zeit. Die Schaltanschluss-Aktiv-Zeit ist beispielsweise eine fest vorgegebene Zeit von z.B. wenigen Sekunden. Ein Wechsel in den Aus-Zustand ist vorzugsweise ausschließlich ausgehend vom Entladezustand möglich.

Ein Einschalten des Geräts und speziell ein Wechsel vom Aus-Zustand in den Entladezustand, ist zunächst über den Ladezustand möglich. In einer geeigneten Ausgestaltung wechselt das Gerät vom Aus-Zustand in den Ladezustand, wenn die Ladespannung wenigstens der Ladeschwellenspannung entspricht. Alternativ oder zusätzlich ist ein Wechsel aus dem Aus-Zustand durch ein manuelles Einschalten des Geräts durch den Nutzers möglich. Hierfür weist das Gerät insbesondere einen Schalter auf, z.B. einen Knopf, Taster, Schiebeschalter oder Vergleichbares.

Die beschriebene Lösung zum automatischen Ausschalten des Geräts ist bei einem kontaktgebundenen Laden ohne weiteres möglich, da hierbei eine galvanische Verbindung besteht, über welche die Zwischenspannung auf einfache Weise einstellbar ist. Da die Ladespannung unmittelbar vom Ladegerät bereitgestellt wird, ist die Zwischenspannung entsprechend einfach einstellbar. Bei einem Ladegerät zum drahtlosen Laden ist dies jedoch nicht ohne weiteres möglich, da die Ladespannung nicht direkt vom Ladegerät bereitgestellt wird, sondern von diesem mittels des Sendemoduls lediglich im Gerät induziert wird und somit im Ladegerät selbst nicht unbedingt vorliegt. Ohne ein automatisches Ausschalten muss das Ladegerät jedoch fortlaufend Energie an das Gerät übertragen, um ein Aktivieren des Entladezustands zu verhindern und bei einer Unterbrechung der Energiezufuhr würde das Gerät regelmäßig automatisch in den Entladezustand versetzt, gegebenenfalls mit dazwischen aktiviertem Wartezustand wie oben beschrieben. Ein Ausgangspunkt der vorliegenden Erfindung ist nun insbesondere, den Aus-Zustand wie beschrieben speziell für ein Ladegerät zum drahtlosen Laden zu realisieren, also gerade nicht kontaktgebunden, sondern drahtlos. Die bisherigen Ausführungen gelten sowohl für ein kontaktgebundenes wie auch für ein drahtloses Laden. Bei einem Ladegerät zum drahtlosen Laden erfolgt der Energietransfer vom Ladegerät zum Gerät mittels einem Sendemodul im Ladegerät und einem Empfangsmodul im Gerät.

Beim Laden erfolgt eine Energieübertragung vorzugsweise mittels eines Magnetfelds, welches mit einer Sendespule des Sendemoduls erzeugt wird und welches mit einer Empfangsspule des Empfangsmoduls empfangen wird. Um dann bei einem drahtlosen Ladegerät die Ladespannung auf die Zwischenspannung einzustellen, wird entsprechend das Sendemodul derart angesteuert, dass im Gerät die Zwischenspannung induziert wird. Ein wichtiger Vorteil der vorliegenden Erfindung ist insbesondere, dass mit dem Ladegerät das Gerät drahtlos ausgeschaltet wird. Hierzu wird mit dem Magnetfeld des Ladegeräts die Ladespannung auf die Zwischenspannung eingestellt, sodass das Gerät in den Aus-Zustand wechselt. Damit ist ein drahtloses automatisches Ausschalten mittels eines Magnetfelds realisiert. Das ansonsten zum Laden verwendete Magnetfeld stellt somit bei entsprechender Ansteuerung zugleich das Ausschaltsignal dar, welches vom Ladegerät an das Gerät gesendet wird. Hierzu sind das Gerät und das Ladegerät entsprechend geeignet ausgebildet. Insbesondere wird im Ladegerät das Magnetfeld, welches allgemein im Gerät die Ladespannung induziert, derart geändert, dass die Zwischenspannung erzeugt wird. Der Aus-Zustand wird insbesondere dann automatisch aktiviert, wenn das Gerät vollständig geladen ist oder das Ladegerät keine Energie mehr bereitstellt (siehe die diversen Szenarien weiter oben), sodass das Gerät dann ausgeschaltet ist und keine Energie verbraucht. Das drahtlose automatische Ausschalten ist weiterhin vorteilhaft, da dadurch im Vergleich zu einem kontaktgebundenen automatischen Ausschalten eine freiere räumliche Anordnung des Geräts und des Ladegeräts relativ zueinander möglich ist, zumindest innerhalb der Grenzen, in welchen noch eine Energieübertragung zum Laden möglich ist.

Das Ladegerät und das Gerät zum drahtlosen Laden bilden zusammen ein drahtloses Ladesystem. Das Gerät weist insbesondere zusätzlich zum Energiemanagementmodul und dem Energiespeicher noch das bereits erwähnte Empfangsmodul auf sowie einen oder mehrere Verbraucher. Die Verbraucher werden im Entladezustand mit Energie aus dem Energiespeicher betrieben, Beispiele für Verbraucher sind ein BLE-Modul, welches eine BLE-Funktion bereitstellt, eine Signalverarbeitungseinheit oder elektroakustische Verbraucher, z.B. ein Hörer oder ein Mikrofon. Das Empfangsmodul stellt die Ladespannung bereit und gibt diese an das Energiemanagementmodul aus. Das Empfangsmodul ist ausgebildet zum Empfangen von Energie vom Ladegerät, welches entsprechend zum Senden der Energie das bereits erwähnte Sendemodul aufweist. Geeigneterweise weist das Sendemodul zum Senden von Energie eine Sendespule auf und das Empfangsmodul weist analog zum Empfangen der Energie eine Empfangsspule auf. Die Sendespule wird allgemein mit einer Stromquelle des Ladegeräts betrieben. Das Empfangsmodul weist zweckmäßigerweise eine Beschaltung für die Empfangsspule auf, um die Ladespannung zu erzeugen. Die Beschaltung weist beispielsweise einen Abstimmkondensator, einen Glättungskondensator und eine Schottky-Diode auf.

Die Ladespannung V_{cc} ist typischerweise von einer Vielzahl an Parametern abhängig, insbesondere vom Strom Iₜₓ zur Sendespule, der jeweiligen Induktivität der Sendespule Lₜₓ und der Empfangsspule Lᵣₓ, einer Übertragungsfrequenz f , welche zur Übertragung der Energie mittels des Magnetfelds genutzt wird, und einem Kopplungsfaktor k. Der Kopplungsfaktor wiederum ist insbesondere abhängig vom Abstand und vom Neigungswinkel zwischen der Sendespule und der Empfangsspule, d.h. allgemein von der räumlichen Anordnung des Ladegeräts und des Geräts beim Laden. Je geringerer der Abstand und je geringer der Neigungswinkel, desto größer der Kopplungsfaktor. Für die Ladespannung gilt allgemein: V_{cc} ∝ 2π · f · k · √(Lₜₓ · Lᵣₓ) · Iₜₓ. Daraus wird speziell deutlich, dass die Ladespannung, welche tatsächlich im Gerät vorliegt, von einigen Parametern (Übertragungsfrequenz, Induktivität der Sendespule, Strom zum Betrieb der Sendespule) des Ladegeräts abhängt und entsprechend von diesem manipulierbar ist.

Die Ausschalt-Schaltung für das drahtlose automatische Ausschalten ist grundsätzlich wie für das kontaktgebundene automatische Ausschalten ausgebildet. Mit anderen Worten: die Ausschalt-Schaltung weist einen Schalter auf, vorzugsweise einen Transistor, welcher durch die Zwischenspannung, geschaltet (insbesondere eingeschaltet) wird. Der Transistor der Ausschalt-Schaltung ist bevorzugterweise ein MOSFET. Der Widerstand, welcher Gate und Source des Transistors verbindet, weist geeigneterweise einen hohen Wert auf, z.B. 100 kΩ und allgemein bevorzugterweise zwischen 10 kΩ und 1 MΩ. Das Gate ist auf die Ladespannung vom Empfangsmodul hochgezogen. Der Drain ist mit dem Schaltanschluss des Energiemanagementmoduls verbunden, die Source mit Masse. Auf diese Weise werden wie bereits beschrieben vier Betriebszustände ermöglichst, unter anderem der Aus-Zustand.

Das Ladegerät weist zum drahtlosen Energietransfer geeigneterweise noch einen Umwandler und einen Oszillator auf. Der Oszillator erzeugt einen Strom zum Betrieb der Sendespule und ist demnach eine Stromquelle. Die Sendespule und der Oszillator bilden dann das Sendemodul. Der Oszillator ist beispielsweise ein Wechselrichter oder Leistungsverstärker und erzeugt allgemein einen Strom (d.h. Wechselstrom) zur Erzeugung des Magnetfelds mit dem Sendemodul. Der Umwandler hingegen erzeugt eine Wandlerspannung, zum Betrieb des Oszillators. Der Umwandler beeinflusst somit den Strom, mit welchem die Sendespule betrieben wird. Die Ladespannung und damit speziell auch die Zwischenspannung wird somit mittels der Wandlerspannung eingestellt. Bevorzugterweise ist der Umwandler ein Abwärtswandler (auch als Tiefsetzsteller oder "buck converter" bezeichnet), welcher ausgebildet ist, eine Eingangsspannung in eine demgegenüber reduzierte Ausgangsspannung, nämlich die Wandlerspannung umzuwandeln. Der Umwandler ist insbesondere mit einer Energiequelle für das Ladegerät verbunden oder verbindbar, z.B. mit einem Energiespeicher des Ladegeräts oder mit einem Stromnetz außerhalb des Ladegeräts.

Für feste Werte der Induktivitäten von Sendespule und Empfangsspule und der Übertragungsfrequenz steigt die Ladespannung insbesondere jeweils linear einerseits mit steigendem Kopplungsfaktor sowie andererseits mit steigendem Strom zur Sendespule. Diese beiden Zusammenhänge, nämlich zwischen Ladespannung und Kopplungsfaktor einerseits und zwischen Ladespannung und Strom andererseits, werden vorliegend vorteilhaft genutzt, um bei bekanntem Kopplungsfaktor die Ladespannung im Gerät mittels des Stroms zur Sendespule im Ladegerät zu steuern und damit gezielt den Aus-Zustand zu aktivieren. Die Wandlerspannung des Umwandlers im Ladegerät steuert den Oszillator, welcher wiederum den Strom zur Sendespule steuert. Mit dem Umwandler und dessen Wandlerspannung ist somit zunächst der Strom zur Sendespule einstellbar und dann letztendlich auch die Ladespannung im Gerät, welche auf diese Weise auch auf die Zwischenspannung einstellbar ist. Der Aus-Zustand des Geräts wird dann extern vom Ladegerät durch eine geeignete Steuerung des Umwandlers und Einstellen von dessen Wandlerspannung aktiviert. Der Zusammenhang zwischen Wandlerspannung V_{dd} und Ladespannung V_{cc} ist wie oben beschrieben durch V_{cc} ∝ 2π · f · k · √(Lₜₓ · Lᵣₓ) · Iₜₓ, wobei der Strom Iₜₓ wie beschrieben eine Funktion der Wandlerspannung V_{dd} ist, geeigneterweise ist der Strom proportional zur Wandlerspannung.

Die Wandlerspannung, welche einzustellen ist, um eine bestimmte Ladespannung und insbesondere die Zwischenspannung zu erzeugen, ist - wie oben beschrieben - abhängig von dem Kopplungsfaktor zwischen dem Sendemodul und dem Empfangsmodul und kann grundsätzlich variieren. Die Induktivitäten und die Übertragungsfrequenz sind dagegen für ein gegebenes Ladesystem prinzipbedingt bekannt. Die Übertragungsfrequenz liegt vorzugsweise zwischen 3 MHz und 30 MHz und beträgt beispielsweise 13,56 MHz. In einer bevorzugten Ausgestaltung werden daher zum Erzeugen der Zwischenspannung die Wandlerspannung und somit auch der Strom eingestellt, indem zunächst der Kopplungsfaktor bestimmt wird und dann mit diesem diejenige Wandlerspannung bestimmt wird, welche benötigt wird, um die Zwischenspannung zu erzeugen. Dies erfolgt anhand des Zusammenhangs zwischen Ladespannung und Wandlerspannung, nämlich V_{cc} ∝ 2π · f · k · √(Lₜₓ · Lᵣₓ) · Iₜₓ(V_{dd}). Zum automatischen Ausschalten wird dann die auf diese Weise bestimmte Wandlerspannung eingestellt, sodass dann im Gerät die Zwischenspannung induziert wird und das Gerät in den Aus-Zustand wechselt.

Der Kopplungsfaktor wird geeigneterweise ebenfalls über den Zusammenhang zwischen Ladespannung und Strom/Wandlerspannung bestimmt, nun aber mit einem bekannten Wertepaar für die Ladespannung V_{cc} und den Strom Iₜₓ. Da die Ladespannung dem Ladegerät nicht bekannt ist, ist zur Ermittlung des Kopplungsfaktors dann eine Kommunikation zwischen dem Ladegerät und dem Gerät vorteilhaft. Am Ende des Ladens, wenn also keine Energie mehr an das Gerät übertragen wird, sendet das Gerät die zuletzt noch während des Ladens anliegende Ladespannung (genauer gesagt: deren Wert) an das Ladegerät. Diese zuletzt noch anliegende Ladespannung wird auch als "finale Ladespannung" bezeichnet. Die finale Ladespannung ist insbesondere größer als die Reset-Spannung und die Gate-Source-Schwellenspannung. Zudem speichert das Ladegerät denjenigen Strom (genauer gesagt: dessen Wert), welcher zum Zeitpunkt der finalen Ladespannung zum Betrieb der Sendespule genutzt wird, d.h. den zuletzt noch während des Ladens anliegenden Strom, welcher analog als finaler Strom bezeichnet wird. Die finale Ladespannung wird über eine Datenverbindung zwischen dem Gerät und dem Ladegerät gesendet. Hierfür weisen das Gerät und das Ladegerät jeweils eine Kommunikationseinheit auf, z.B. eine Antenne und eine geeignete Schaltung für die Antenne, zum Senden und/oder Empfangen von Daten, speziell der finalen Ladespannung. Das Ladegerät empfängt die finale Ladespannung, woraufhin dann in Kombination mit dem finalen Strom der Kopplungsfaktor bestimmt wird, insbesondere über den genannten Zusammenhang.

Mit der beabsichtigen Zwischenspannung und dem Kopplungsfaktor wird dann die Wandlerspannung des Umwandlers bestimmt. Da die Zwischenspannung in einem Spannungsbereich zwischen der Reset-Spannung und der Gate-Source-Mindestschwellenspannung liegt, ergibt sich entsprechend auch für die Wandlerspannung dann ein geeigneter Spannungsbereich, aus welchem dann die Wandlerspannung ausgewählt wird, z.B. einfach der Mittelwert des Spannungsbereichs.

Zusammenfassend umfasst das Einstellen der Wandlerspannung somit vorzugsweise die folgenden vier Schritte: In einem ersten Schritt werden ein finaler Strom und eine finale Ladespannung ermittelt. Darauffolgend wird in einem zweiten Schritt der Kopplungsfaktor anhand des finalen Stroms und der finalen Ladespannung bestimmt. Darauffolgend wird in einem dritten Schritt mit dem Kopplungsfaktor und der beabsichtigten Zwischenspannung die hierfür nötige Wandlerspannung bestimmt. Diese Wandlerspannung wird schließlich in einem vierten Schritt eingestellt.

Der zur Bestimmung des Kopplungsfaktors und der Wandlerspannung jeweils verwendete Zusammenhang ist beispielsweise als Funktion oder als Tabelle in einem Speicher des Ladegeräts hinterlegt. Zweckmäßigerweise ist der Zusammenhang V_{cc} ∝ 2π · f · k · √(Lₜₓ · Lᵣₓ) · Iₜₓ(V_{dd}) hierfür jeweils als parametriertes Funktionsbündel hinterlegt. Zur Bestimmung des Kopplungsfaktors ist die Ladespannung insbesondere als Funktion des Kopplungsfaktors hinterlegt und mit dem Strom parametriert, sodass sich ein entsprechendes Funktionsbündel ergibt. Zur Bestimmung der Wandlerspannung ist die Ladespannung insbesondere als Funktion der Wandlerspannung hinterlegt und mit dem Kopplungsfaktor parametriert, sodass sich ein entsprechendes Funktionsbündel ergibt.

Nachfolgend werden zur Illustration typische Zahlenbeispiele beschrieben, welche jedoch nicht beschränkend zu verstehen ist, aber jedenfalls geeignete Größenordnungen angeben.

Die finale Ladespannung beträgt beispielsweise 7,6 V, der zugehörige finale Strom beträgt beispielsweise 0,5 A. Anhand dieser Werte und in Kombination mit den Induktivitäten und der Übertragungsfrequenz wird der Kopplungsfaktor beispielshaft als k = 0,07 bestimmt. Die Reset-Spannung beträgt beispielsweise 2 V und die Gate-Source-Mindestschwellspannung 1 V, dann ergibt sich für die beabsichtigte Zwischenspannung ein Spannungsbereich zwischen 1 V und 2 V. Für diese Zwischenspannung wird dann mit dem Kopplungsfaktor k = 0,07 beispielhaft eine Wandlerspannung im Bereich von 0,125 V und 0,275 V bestimmt. Die Wandlerspannung wird dann beispielsweise auf 0,2 V eingestellt, sodass sich im Gerät die entsprechende Zwischenspannung ergibt und das Gerät in den Aus-Zustand wechselt, drahtlos initiiert durch das Ladegerät.

Ein jeweiliger Transistor ist insbesondere nur dann geeignet, wenn dessen Gate-Source-Schwellenspannung zumindest bereichsweise kleiner ist als die Reset-Spannung, andere Transistoren sind dagegen ungeeignet für die Ausschalt-Schaltung. Für die oben beispielhaft genannte Reset-Spannung von 2 V ergibt sich dann, dass ein geeigneter Transistor eine Gate-Source-Mindestschwellenspannung von weniger als 2 V aufweist, z.B. 1,4 V oder 0,7 V.

Die Reset-Spannung definiert für sämtliche Abstände insbesondere eine Obergrenze für die Wandlerspannung, denn diese darf denjenigen Wert nicht überschreiten, welcher im Gerät zur Überschreitung der Reset-Spannung führt (der Einfachheit halber wird hier vom Abstand gesprochen, die Ausführungen gelten jedoch allgemein für die Kopplungskonstante). Bei der beispielhaft genannten Reset-Spannung von 2 V beträgt die Obergrenze für die Wandlerspannung beispielsweise 0,69 V. Sofern dies nicht eingehalten werden kann, ist ein automatisches Ausschalten für einige Abstände unter Umständen nicht möglich. Der Abstand zwischen der Sendespule und der Empfangsspule beträgt zum Laden geeigneterweise zwischen 1 mm und 10 mm. Um für alle Abstände ein automatisches Ausschalten zu ermöglichen, muss die Ladespannung bei jedem Abstand oberhalb der Gate-Source-Schwellenspannung liegen. Für diejenigen Abstände, für welche diese Bedingung nicht erfüllt ist, ist ein automatisches Ausschalten nicht möglich. Daraus wird deutlich, dass ein Transistor mit einer möglichst geringen Gate-Source-Mindestschwellenspannung ein automatisches Ausschalten für einen deutlich größeren Bereich an Abständen ermöglicht. Im oben genannten Beispiel mit einem Transistor mit einer Gate-Source-Mindestschwellenspannung von 0,685 V beträgt damit der Spannungsbereich, welcher für die Wandlerspannung zur Verfügung steht, um für alle Abstände eine geeignete Zwischenspannung zum automatischen Ausschalten zu erzeugen, lediglich 0,005 V. Eine geringere Wandlerspannung reicht dann möglicherweise nicht mehr aus für ein automatisches Abschalten ist in einem Abstand von 5 mm oder mehr. Mit einem anderen Transistor, mit einer Gate-Source-Mindestschwellenspannung von 0,5 V, beträgt der Spannungsbereich, welcher für die Wandlerspannung zur Verfügung steht, um für alle Abstände eine geeignete Zwischenspannung zum automatischen Ausschalten zu erzeugen, ca. 0,2 V. Damit ist dann ein automatisches Ausschalten im gesamten Bereich von 1 mm bis 10 mm problemlos möglich. Ein möglichst weiter Spannungsbereich für die Wandlerspannung ist zudem vorteilhaft, um auch mögliche Toleranzen auszugleichen.

In einem beispielhaften Anwendungsfall beträgt der Abstand der Sendespule zur Empfangsspule 4 mm. Das Gerät wechselt zunächst in den Ladezustand und wird geladen. Zum automatischen Ausschalten wird dann die Wandlerspannung des Umwandlers auf 0,6 V eingestellt. Die Ladespannung im Gerät wird damit auf eine Zwischenspannung von 1,5 V eingestellt. Das Gerät wechselt zunächst in den Entladezustand und beginnt wenige Sekunden später Energie zu verbrauchen, wofür das Energiemanagementmodul an die Verbraucher eine Spannung von z.B. 1,3 V bereitstellt. Dann wechselt das Gerät in den Aus-Zustand. Nach wenigen Sekunden (z.B. ≥ 6 s) wird die Wandlerspannung dann auf 0 V eingestellt, um den Umwandler auszuschalten. Das Ladegerät kann nun insgesamt ausgeschaltet werden und vom Gerät getrennt werden, wobei das Gerät dann weiterhin im Aus-Zustand verharrt, ohne zurück in den Entladezustand zu wechseln, obwohl die Ladespannung dann 0 V beträgt.

Dadurch, dass zum automatischen Ausschalten des Geräts zweckmäßigerweise der Kopplungsfaktor bestimmt wird, wird automatisch auch die tatsächliche räumlichen Anordnung von Gerät und Ladegerät berücksichtigt, sodass ein Ausschalten vorteilhaft weitestgehend unabhängig von dieser Anordnung ist. Damit ist ein hoher Freiheitsgrad bei der Anordnung möglich ohne die Funktion des automatischen Ausschaltens zu kompromittieren. Das automatische Ausschalten wird vom Ladegerät mittels dessen Magnetfeld initiiert. Im Gegensatz zum kontaktgebundenen (d.h. mit galvanischer Verbindung von Gerät und Ladegerät) automatischen Ausschalten ist das drahtlose (d.h. ohne galvanische Verbindung von Gerät und Ladegerät) automatische Ausschalten zunächst komplizierter, denn die Zwischenspannung kann nicht einfach vom Ladegerät eingestellt werden, da diese nur mittelbar über das Magnetfeld erzeugt wird und zudem abhängig von der Kopplungskonstante ist. Entsprechend werden geeignete Daten, nämlich die finale Ladespannung, vom Gerät an das Ladegerät übertragen. Die hier beschriebene Lösung zum drahtlosen automatischen Ausschalten unterscheidet sich demnach von der Lösung zum kontaktgebundenen automatischen Ausschalten insbesondere einerseits durch die Ausgestaltung des Ladegeräts, speziell dessen Hardware im Allgemeinen und dessen Umwandler und Kommunikationseinheit im Speziellen, und andererseits durch die Ausgestaltung des Geräts, speziell dessen Schalter der Ausschalte-Schaltung.

Bezüglich der Hardware im Allgemeinen ist das Ladegerät zunächst zum drahtlosen Laden ausgebildet und vorzugsweise nicht zum kontaktgebundenen Laden. Ein Kontaktmodul mit entsprechenden elektrischen Kontakten, z.B. Kontaktpins oder Pogo-Pins, zur Übertragung von Energie ist nicht notwendig und fehlt vorzugsweise. Das Ladegerät weist jedoch wie beschrieben ein Sendemodul zum Energietransfer auf und weiterhin eine Kommunikationseinheit, zum Datenaustausch mit dem Gerät. Die Antenne der Kommunikationseinheit ist beispielsweise spiral- und/oder helixförmig und als Draht oder Leiterbahn ausgebildet.

Das Gerät und das Ladegerät weisen somit jeweils vorzugsweise eine Kommunikationseinheit auf, zum Austausch von Daten. Die Kommunikationseinheit des Ladegeräts bildet mit der Kommunikationseinheit des Geräts ein Kommunikationssystem zum Datenaustausch. Das Kommunikationssystem dient vorliegend insbesondere wenigstens dazu, Daten insbesondere betreffend die Ladespannung vom Gerät an das Ladegerät zu übermitteln. Entsprechend kann das Kommunikationssystem bidirektional ausgebildet sein oder lediglich monodirektional vom Gerät zum Ladegerät. Das Kommunikationssystem ist vorzugsweise drahtlos und verwendet ein entsprechendes Kommunikationsprotokoll, beispielsweise magnetische Induktion in einem Kommunikationsfrequenzband im MHz-Bereich zur Übertragung von Daten. Die Übertragung von Daten erfolgt entweder innerhalb (d.h. "in-band") des Kommunikationsfrequenzbands, z.B. mittels Amplitudenmodulation, oder außerhalb (d.h. "out-of-band") des Kommunikationsfrequenzbands, z.B. mittels Frequenzmodulation oder Phasenumtastung (d.h. "phase-shift keying"). Entsprechend werden die Daten vom Gerät zur Übertragung insbesondere moduliert (auch als "load modulation" bezeichnet). Die Daten, welche vom Gerät an das Ladegerät übertragen werden, sind insbesondere Daten bezüglich des Energiespeichers des Geräts und vorzugsweise dessen Ladezustand (SOC = "state of charge"), aktuelle Spannung, aktueller Ladestrom, Temperatur, die bereits beschriebene Ladespannung oder eine Kombination hiervon. Das Ladegerät empfängt die Daten und demoduliert diese insbesondere (auch als "load demodulation" bezeichnet). Zur Demodulierung weist das Ladegerät geeigneterweise eine Demodulatorschaltung auf. In einer vorteilhaften Ausgestaltung wird mit der Demodulatorschaltung auch der Strom im Sendemodul bestimmt, genauer gesagt der Strom durch die Sendespule, welche hierzu in die Demodulatorschaltung integriert ist. Hierzu weist die Demodulatorschaltung geeigneterweise einen Kondensator auf, an welchem sich der Strom als Verhältnis einer maximalen Objekterkennungsspannung der Demodulatorschaltung und dessen Impedanz bei der Übertragungsfrequenz der Sendespule ergibt.

Der Umwandler ist im Falle eines kontaktgebundenen automatischen Ausschaltens geeigneterweise ein Low-Drop-Spannungsregler (LDO = "low dropout regulator") oder ein Abwärtswandler und gibt als Wandlerspannung eine Spannung zwischen der Reset-Spannung und der Gate-Source-Mindestschwellenspannung aus, um das Gerät auszuschalten. Dieser Spannungsbereich für die Wandlerspannung ist jedoch beim drahtlosen automatischen Ausschalten nicht unbedingt anwendbar, da in diesem Fall zum Ausschalten typischerweise eine geringere Wandlerspannung erforderlich ist. Beim drahtlosen automatischen Ausschalten ist die Wandlerspannung des Umwandlers eine Eingangsspannung für den Oszillator. Der Oszillator ist insbesondere ein Leistungsverstärker. Geeigneterweise ist die Wandlerspannung eine Gleichspannung und der Oszillator wandelt dann die Wandlerspannung in eine Wechselspannung um, um den Strom für die Sendespule entsprechend als Wechselstrom zu erzeugen. Der Oszillator verstärkt insbesondere auch die Wandlerspannung des Umwandlers, sodass sich im Gerät letztendlich eine entsprechend größere Ladespannung ergibt, besonders dann, wenn die Empfangsspule mehr Windungen als die Sendespule aufweist. Wenn die Ladespannung zu hoch ist, insbesondere höher als die Reset-Spannung, dann wechselt das Gerät in den Ladezustand oder den Wartezustand, nicht jedoch in den Aus-Zustand, welcher nun nicht mehr erreichbar ist. Die Wandlerspannung des Umwandlers ist daher im Falle des drahtlosen automatischen Ausschaltens deutlich geringer als im Falle des kontaktgebundenen automatischen Ausschaltens und liegt geeigneterweise im Millivoltbereich, d.h. insbesondere wenigstens 1 mV und jedenfalls weniger als 0,6 V. Der Umwandler, speziell in der Ausgestaltung als Abwärtswandler, ist typischerweise nicht in der Lage, eine Wandlerspannung unterhalb einer bezüglich des Umwandlers internen Feedback-Referenzspannung ("feedback reference voltage") zu erzeugen, welche regelmäßig wenigstens 0,6 V beträgt. Daher weist das Ladegerät in einer bevorzugten Ausgestaltung zusätzlich zum Umwandler eine Spannungsreferenzschaltung auf, um insgesamt eine Wandlerspannung unterhalb der Feedback-Referenzspannung des Umwandlers zu erzeugen. Die Spannungsreferenzschaltung weist hierzu eine bezüglich des Umwandlers externe Referenzspannung auf, welche an einen Feedback-Anschluss des Umwandlers angeschlossen ist. Die externe Referenzspannung ist größer als die interne Feedback-Referenzspannung. Die Spannungsreferenzschaltung ist dann derart ausgebildet und mit dem Umwandler verbunden, dass sich die Wandlerspannung V_{dd} ergibt als Differenz der internen Feedback-Referenzspannung V_{fb} einerseits und der mit einem geeigneten Widerstandsverhältnis R1/R2 zweier Widerstände gewichteten Differenz aus externer Referenzspannung V_{ref} und interner Feedback-Referenzspannung V_{fb} andererseits. Mit anderen Worten: V_{dd} = V_{fb} - R1 · (V_{ref} - V_{fb})/R2. Die beiden Widerstände bilden insbesondere einen Spannungsteiler, mit zwei Endpunkten, an welchen ein Ausgang des Umwandlers einerseits und die externe Referenzspannung andererseits angeschlossen sind, und mit einem Mittenpunkt zwischen den beiden Widerständen, an welchen der Feedback-Anschluss angeschlossen ist.

Der Schalter der Ausschalte-Schaltung des Geräts ist - wie oben beschrieben - vorzugsweise ein Transistor, speziell ein MOSFET. Dieser ist hinsichtlich der beteiligten Spannungen vorzugsweise wie nachfolgend beschrieben ausgebildet. Die Gate-Source-Maximalschwellenspannung ist zweckmäßigerweise so groß wie möglich, um eine Beschädigung zu vermeiden, falls die Ladespannung unbeabsichtigt oder in einem Fehlerfall zu hoch ist. Beispielsweise ist es möglich, dass die Ladespannung beim Beginn des Ladens schwankt und noch nicht stabil ist oder, dass durch eine externe Interferenz die Ladespannung überschwingt. Die Gate-Source-Maximalschwellenspannung entspricht geeigneterweise wenigstens der maximal möglichen Ladespannung. Weiter von Bedeutung ist die Gate-Source-Schwellenspannung, welche insbesondere auch als Einschaltspannung bezeichnet wird. Die Gate-Source-Schwellenspannung ist zweckmäßigerweise geringer als die Reset-Spannung, sodass das Gerät in den Entladezustand und von dort in den Aus-Zustand wechseln kann. Je größer der Spannungsbereich zwischen Gate-Source-Mindestschwellenspannung und Reset-Spannung ist, für desto mehr verschiedene räumliche Anordnungen (Abstand und Neigungswinkel) von Gerät und Ladegerät zueinander ist ein automatisches Ausschalten möglich. Daher ist eine möglichst geringe Gate-Source-Schwellenspannung bevorzugt. Zum automatischen Ausschalten muss die Ladespannung auf eine Zwischenspannung im Spannungsbereich zwischen Gate-Source-Mindestschwellenspannung und Reset-Spannung fallen. Der Spannungsbereich zwischen Gate-Source-Mindestschwellenspannung und Reset-Spannung weist vorzugsweise eine Breite von wenigstens 1 V auf. Zusammenfassend gilt somit vorzugsweise: 1) Gate-Source-Mindestschwellenspannung V_{gs-thres} < Ladespannung V_{cc} < Reset-Spannung Vᵣₛₜ und 2) Reset-Spannung Vᵣₛₜ - Gate-Source-Maximalschwellenspannung V_{gs,max_thres} ≥ 1 V.

Geeigneterweise weist das Ladegerät eine Steuereinheit auf, an welche die Kommunikationseinheit und der Umwandler angeschlossen sind. Mittels der Steuereinheit wird der Umwandler eingestellt, nämlich basierend auf den Daten, welche mittels der Kommunikationseinheit empfangen wurden.

Zweckmäßigerweise weist das Ladegerät einen Notfall-Energiespeicher auf, um bei einer Unterbrechung der Energieversorgung zum Ladegerät (vgl. obige Szenarien) dennoch die Zwischenspannung einzustellen und hierfür insbesondere das Ausschaltsignal zu erzeugen und somit das Gerät noch zu veranlassen in den Aus-Zustand zu wechseln. Bei einer Unterbrechung der Energieversorgung zum Ladegerät steht spontan keine Energie mehr zur Verfügung, um das Ladegerät zu betreiben, sodass dieses auch kein Ausschaltsignal für das Gerät mehr erzeugen kann. Durch den Notfall-Energiespeicher ist aber abseits der regulären Energieversorgung per Kabel oder Energiespeicher eine Energiequelle vorhanden, welche zumindest kurzzeitig noch genug Energie bereitstellt, um das Ausschaltsignal zu erzeugen. Der Notfall-Energiespeicher ist insbesondere separat ausgebildet zu einem Energiespeicher, welcher gegebenenfalls im Ladegerät zum Laden des Geräts vorhanden ist. Der Notfall-Energiespeicher ist entsprechend gering dimensioniert. Der Notfall-Energiespeicher ist geeigneterweise eine Batterie oder ein Superkondensator.

Insgesamt wird durch die Ausschalt-Schaltung in Kombination mit dem Kommunikationssystem ein vorteilhaftes Verfahren realisiert, bei welchem initiiert vom Ladegerät ein drahtloses automatisches Ausschalten des Geräts erfolgt, insbesondere speziell am Ende eines Ladens des Energiespeichers des Geräts und allgemein bei einer Unterbrechung der Energieübertragung vom Ladegerät zum Gerät. Das Verfahren weist hierzu vorzugsweise einen oder mehrere der nachfolgenden Schritte auf, bevorzugterweise in der genannten Reihenfolge. In einem ersten Schritt sendet das Gerät Daten an das Ladegerät, vorzugsweise wiederkehrend. In einem zweiten Schritt werden die Daten analysiert, z.B. von der Steuereinheit. Sofern die Daten moduliert sind, werden diese zuvor im zweiten Schritt z.B. mit der beschriebenen Demodulatorschaltung demoduliert. In einem dritten Schritt wird der Umwandler basierend auf den Daten eingestellt, insbesondere von der Steuereinheit. Die Steuereinheit stellt den Umwandler beispielsweise mit einem DAC-Signal (DAC ="digital analog converter") oder einem PWM-Signal (PWM = "pulse width modulation") ein. In einem vierten Schritt gibt der Umwandler daraufhin eine Wandlerspannung an den Oszillator aus und steuert diesen dadurch. Ebenfalls im vierten Schritt gibt der Oszillator einen Strom aus, mit welchem dann die Sendespule betrieben wird. Der Strom wird somit im vierten Schritt mittelbar vom Umwandler eingestellt. In einem fünften Schritt erzeugt die Sendespule abhängig vom Strom ein Magnetfeld. In einem sechsten Schritt wird das Magnetfeld von der Empfangsspule empfangen, welche abhängig davon eine Ladespannung im Gerät erzeugt, sodass insgesamt das Ladegerät im Gerät eine Ladespannung induziert. In einem siebten Schritt wird dann das Gerät ausgeschaltet, falls die Ladespannung im Spannungsbereich zwischen der Reset-Spannung und der Gate-Source-Mindestschwellenspannung liegt, falls also die Ladespannung eine Zwischenspannung wie beschrieben ist. Bei Vorliegen einer Zwischenspannung wechselt demnach das Gerät im siebten Schritt in den Aus-Zustand und ist dann ausgeschaltet. Im siebten Schritt wechselt das Gerät vorzugsweise erst dann in den Aus-Zustand, wenn zusätzlich noch wie beschrieben eine Zeit verstrichen ist, welche länger ist als eine Schaltanschluss-Aktiv-Zeit. Letztendlich erfolgt das automatische Ausschalten abhängig von den Daten, welche das Gerät an das Ladegerät sendet. In einem zweckmäßigen achten Schritt wird schließlich noch der Umwandler ausgeschaltet, vorzugsweise eine bestimmte Zeit, z.B. 10 s, nachdem das Gerät in den Aus-Zustand gewechselt ist. Dadurch wird verhindert, dass der Umwandler weiter Energie verbraucht.

Bisher wurde beschrieben, dass das Gerät ausgeschaltet wird, wenn das Laden beendet ist. Die Daten enthalten dann wenigstens die finale Ladespannung, welche in Verbindung mit dem finalen Strom bestimmt wird und auch in Kombination mit diesem insbesondere von der Steuereinheit verwendet wird, um eine geeignete Wandlerspannung zu bestimmen und den Umwandler dann entsprechend den obigen Ausführungen einzustellen. Grundsätzlich ebenfalls geeignet zur Initiierung des automatischen Ausschaltens sind jedoch auch andere Ereignisse als das Ende des Ladens, z.B. wenn eine Temperatur des Energiespeichers eine Grenztemperatur überschreitet (Überhitzung), wenn Spannung oder Strom am Energiespeicher einen entsprechenden Grenzwert überschreiten (Überspannung/Überstrom), generell bei einem Fehler des Energiespeichers (Fehlerfall), oder ähnliche Ereignisse. Die Steuereinheit schließt dann auf eines oder mehrere dieser Ereignisse, wenn die Steuereinheit die Daten analysiert, und steuert dann den Umwandler entsprechend an, um das automatische Ausschalten zu initiieren.

Nachfolgend werden Ausführungsbeispiele der Erfindung anhand einer Zeichnung näher erläutert. Darin zeigen jeweils schematisch:
- Fig. 1: ein Gerät und ein Ladegerät,
- Fig. 2: ein Ersatzschaltbild des Geräts und des Ladegeräts aus Fig. 1,
- Fig. 3: eine andere Darstellung des Geräts und des Ladegeräts aus Fig. 1,
- Fig. 4: eine andere Darstellung des Geräts aus Fig. 1,
- Fig. 5: vier Betriebszustände des Geräts aus Fig. 1,
- Fig. 6: eine andere Darstellung des Ladegeräts aus Fig. 1,
- Fig. 7: die Ladespannung als Funktion des Kopplungsfaktors,
- Fig. 8: die Ladespannung als Funktion der Wandlerspannung,
- Fig. 9: vier Schritte eines Verfahrens,
- Fig. 10: die Ladespannung als Funktion der Wandlerspannung für zwei verschiedene Transistoren,
- Fig. 11: die Ladespannung und die Spannung für Verbraucher des Geräts als Funktion der Zeit,
- Fig. 12: die Spannungen aus Fig. 11 zu einer demgegenüber späteren Zeit,
- Fig. 13: eine Demodulatorschaltung des Ladegeräts aus Fig. 1,
- Fig. 14: Eine Spannungsreferenzschaltung des Ladegeräts aus Fig. 1,
- Fig. 15: acht Schritte eines Verfahrens.

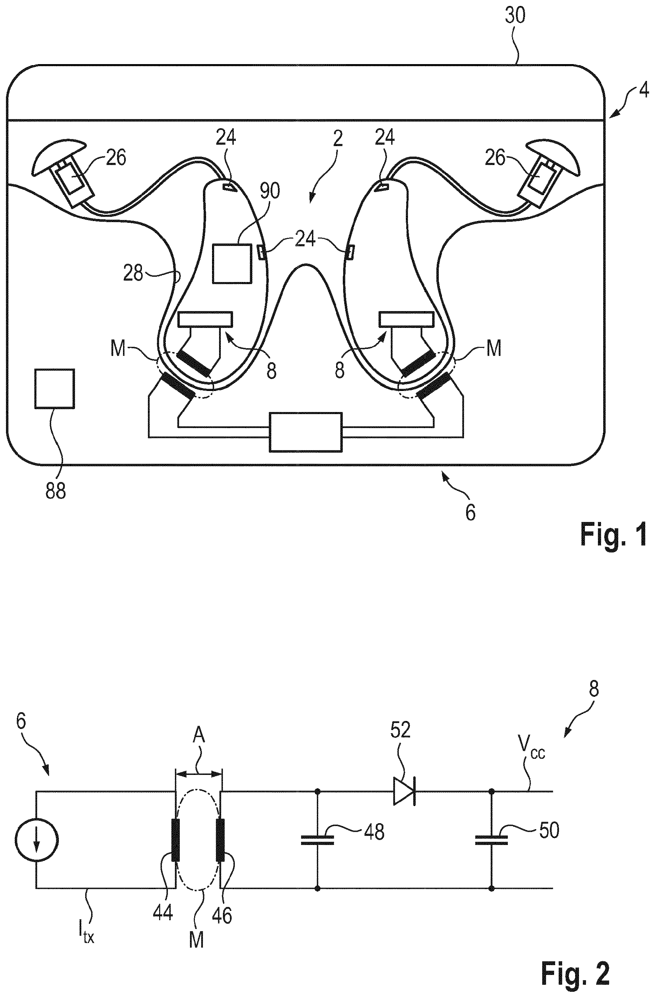

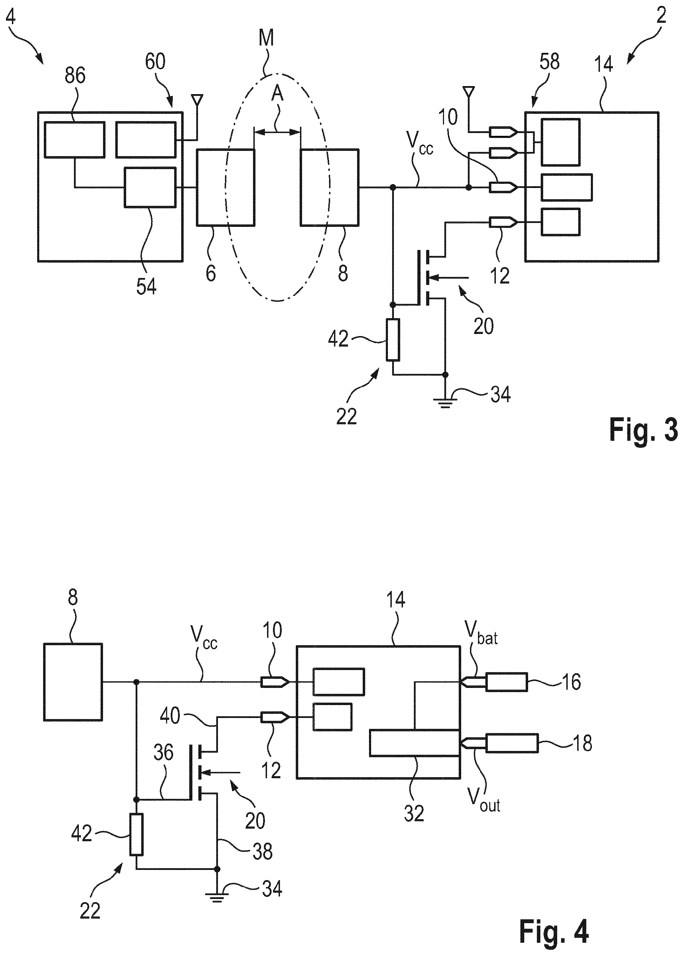

In Fig. 1 sind ein Gerät 2 und ein Ladegerät 4 gezeigt, welche geeignet sind, um das hier beschriebene Verfahren durchzuführen. Das Gerät 2 ist mit dem Ladegerät 4 verbunden und in einem Ladezustand LZ erfolgt ein drahtloses Laden, indem mit einem Sendemodul 6 des Ladegeräts 4 an ein Empfangsmodul 8 des Geräts 2 drahtlos Energie übertragen wird. Das Gerät 2 ist in Fig. 1 ist beispielhaft ein binaurales Hörgerät mit zwei Einzelgeräten, sodass entsprechend zwei Empfangsmodule 8 vorhanden sind, welche vom Sendemodul 6 des Ladegeräts versorgt werden. In Fig. 2 ist ein Ersatzschaltbild für das Gerät 2 und das Ladegerät 4 gezeigt, in Fig. 3 dann nochmals eine andere Darstellung des Geräts 2 und des Ladegeräts 4. In Fig. 4 ist lediglich das Gerät 2 gezeigt. Die Fig. 2, 3 und 4 sind gegenüber der Fig. 1 dahingehend vereinfacht, dass lediglich ein Empfangsmodul 8 und ein Sendemodul 6 gezeigt sind, d.h. nur eines der Einzelgeräte. Die folgenden Ausführungen gelten jedoch allgemein unabhängig von der Anzahl an Sendemodulen 6 und Empfangsmodulen 8, d.h. je nach Ausgestaltung des Geräts 2 und des Ladegeräts 4 können ein oder mehrere Empfangsmodule 8 vorhanden sein und unabhängig davon auch ein oder mehrere Sendemodule 6.

Beim Laden ist das Gerät 2 ausgeschaltet und befindet sich in dem Ladezustand LZ. Das Gerät 2 weist einen Ladeanschluss 10 auf, an welchem zum Laden eine Ladespannung V_{cc} anliegt, welche mit dem Ladegerät 4 einstellbar ist. Weiter weist das Gerät 2 einen Schaltanschluss 12 auf, zum Ein- und Ausschalten. Der Ladeanschluss 10 und der Schaltanschluss 12 sind hier Anschlüsse eines Energiemanagementmoduls 14 (auch als PMIC bezeichnet), welches die Ladespannung V_{cc} entgegennimmt und damit einen Energiespeicher 16 des Geräts 2 lädt.

Das Gerät 2 weist auch einen Entladezustand EZ auf, in welchem Energie verbraucht wird, nämlich von einem oder mehreren Verbrauchern 18. Im Entladezustand EZ steuert das Energiemanagementmodul 14 die Bereitstellung von Energie für die Verbraucher 18 aus dem Energiespeicher 16. Im Ladezustand LZ empfängt das Gerät 2 somit Energie vom Ladegerät 4, im Entladezustand EZ verbraucht das Gerät 2 Energie.

Unter "das Gerät 2 ist eingeschaltet" wird verstanden, dass die Verbraucher 18 mittels des Energiemanagementmoduls 14 mit Energie versorgt werden, unter "das Gerät 2 ist ausgeschaltet" wird dann verstanden, dass die Verbraucher 18 nicht mit Energie versorgt werden, gleichwohl kann das Energiemanagementmodul 14 weiterhin Energie verbrauchen. Im Entladezustand EZ ist das Gerät 2 prinzipbedingt auch eingeschaltet. Sofern nachfolgend beschrieben wird, dass das Gerät 2 "ausgeschaltet wird", wird darunter verstanden, dass das Gerät 2 erstens, falls es eingeschaltet ist, "ausgeschaltet wird", und zweitens, falls das Gerät 2 bereits ausgeschaltet ist, "ausgeschaltet bleibt".

Das Gerät 2 weist außerdem einen Schalter 20 auf, welcher mit dem Schaltanschluss 12 verbunden ist und welcher mit der Ladespannung V_{cc} schaltbar ist, indem die Ladespannung V_{cc} auf eine Zwischenspannung eingestellt wird. Der Schalter 20 ist ein Teil einer Ausschalt-Schaltung 22. Das Gerät 2 wird nun mittels des Ladegeräts 4 ausgeschaltet, indem dieses die Ladespannung V_{cc} auf die Zwischenspannung einstellt, sodass der Schalter 20 geschaltet wird und das Gerät 2 in einen Aus-Zustand AZ wechselt. Das Ladegerät 4 stellt also die Zwischenspannung ein, woraufhin das Gerät 2 in den Aus-Zustand AZ wechselt. Dies erfolgt z.B. beim Beenden oder Unterbrechen des Ladens, kann aber grundsätzlich auch allgemein in einem Fehlerfall erfolgen, z.B. bei Überhitzung oder Überspannung/Überstrom des Energiespeichers 16. Damit wird mit dem Ladegerät 4 ein automatisches Ausschalten realisiert, sobald keine Energie mehr an das Gerät 2 übertragen wird. Das Ladegerät 4 initiiert damit einen Wechsel des Geräts 2 in den Aus-Zustand AZ, in welchem das Gerät 2 dann - anders als im Entladezustand EZ - keine Energie mehr verbraucht. Hierbei nutzt das Ladegerät 4 die Möglichkeit, die Ladespannung V_{cc} variabel einzustellen.

Das hier beispielhaft gezeigt Gerät 2 ist ein Hörgerät, welches zur Versorgung eines Nutzers dient, welcher/welche ein Hördefizit aufweist. Hierzu weist das Hörgerät ein Mikrofone 24 auf (hier je zwei Mikrofone 24 pro Einzelgerät), welches Schall aus der Umgebung aufnimmt und ein elektrisches Eingangssignal erzeugt. Dieses wird zur Modifikation einer nicht explizit gezeigten Signalverarbeitung zugeführt, welche als Ergebnis ein elektrisches Ausgangssignal ausgibt, welches dann über einen Hörer 26 des Hörgeräts wieder in Schall umgewandelt wird und an den Nutzer ausgegeben wird. Anstelle des Mikrofons 24 und des Hörers 26 sind je nach Hörgerätetyp auch andere Eingangs- und/oder Ausgangswandler möglich. Das Hörgerät ist hier binaural ausgebildet, alternativ monaural. Die Mikrofone 24, die Hörer 26 und die Signalverarbeitung sind jeweils Verbraucher 18 des Geräts 2. Alternativ ist das Gerät 2 ein Kopfhörer, Headset, Wearable, Smartphone oder dergleichen.

Zum Laden wird das Gerät 2 mit dem Ladegerät 4 verbunden und hierzu z.B. wie in Fig. 1 gezeigt in dieses eingelegt. Das hier gezeigte Ladegerät 4 ist hierfür als Ladeschale ausgebildet, mit einer Vertiefung 28, in welche das Gerät 2 einlegbar ist. Optional weist das Ladegerät 4 einen Deckel 30 auf. Die Vertiefung ist zweckmäßigerweise derart geformt, dass das Gerät darin in einer möglichst definierten Anordnung relativ zur Ladeschale gehalten ist.

Je nachdem, welche Ladung der Energiespeicher 16 aufweist, stellt dieser für die Verbraucher 18 eine Spannung V_{bat} bereit, welche gegebenenfalls zuvor noch mit einer Transformationseinheit 32 transformiert wird. Je größer die Ladung, desto größer ist diese Spannung V_{bat} typischerweise. Das Gerät 2 wird vom Ladegerät 4 mit einer Ladespannung V_{cc} geladen, welche diejenige Spannung ist, welche im Gerät 2 zum Laden des Energiespeichers 16 vorliegt. Der Energiespeicher 16 wird dann solange geladen, bis die gewünschte Ladung oder Spannung V_{bat} erreicht ist. Hierzu wird eine Ladeschwellenspannung V_{chg,thres} vorgegeben, welche mit der Ladespannung V_{cc} verglichen wird, um festzulegen, wann geladen wird und wann nicht. Das Laden wird dann vorliegend beendet, wenn die Ladespannung V_{cc} die Ladeschwellenspannung V_{chg,thres} unterschreitet. Die Ladeschwellenspannung V_{chg,thres} ist beispielsweise eine fest vorgegebene Spannung.

Das automatische Ausschalten wird vorliegend zwar vom Gerät 2 selbst durchgeführt, von diesem jedoch nicht selbst initiiert, sondern vom Ladegerät 4, welches bestimmt, wann das Gerät 2 ausgeschaltet werden soll und dann ein Ausschaltsignal an das Gerät 2 sendet, sodass dieses ausgeschaltet wird. Das Ausschaltsignal führt dazu, dass im Gerät 2 die Zwischenspannung vorliegt.

Allgemein ist es wünschenswert, nach dem Laden das Gerät 2 auszuschalten, solange dieses noch mit dem Ladegerät 4 verbunden ist. Beim Beenden des Ladezustands LZ soll das Gerät 2 möglichst nicht in den Entladezustand EZ versetzt werden und damit eingeschaltet bleiben, sondern das Gerät 2 soll ausgeschaltet werden.

Um das automatische Ausschalten zu realisieren und dadurch das Gerät 2 nach dem Laden auszuschalten, wird der Ladeanschluss 10 des Energiemanagementmoduls 14 verwendet. Am Ladeanschluss 10 liegt die Ladespannung V_{cc} an. In einer nicht explizit gezeigten Ausgestaltung ist der Schaltanschluss 12 ist mit einem Pull-Up-Widerstand hochgezogen und zwischen dem Schaltanschluss und Masse 34 ist zum manuellen Ausschalten des Geräts 2 ein Schalter angeschlossen, welcher manuell betätigbar ist. Unabhängig davon oder damit geeignet kombiniert weist das Gerät 2 zum automatischen Ausschalten mittels des Ladegeräts 4 die bereits genannte Ausschalt-Schaltung 22 mit Schalter 20 auf, welche in analoger Weise den Ladeanschluss 10 und den Schaltanschluss 12 nutzt. Der Schalter 20 ist hier ein Transistor, speziell ein MOSFET, mit Gate 36, Source 38 und Drain 40, d.h. mit entsprechenden Anschlüssen. Das Gate 36 ist mit dem Ladeanschluss 10 und mit einem Widerstand 42 auf die Ladespannung V_{cc} hochgezogen. Der Widerstand 42 verbindet das Gate 36 mit der Source 38 und mit Masse 34. Der Drain 40 und die Source 38 sind mit dem Schaltanschluss 12 beziehungsweise mit Masse 34 verbunden.

In dem nun realisierten Aus-Zustand AZ ist das Gerät 2 zwar an das Ladegerät 4 angeschlossen, dabei jedoch ausgeschaltet und verbraucht weder selbst Energie, noch empfängt Energie vom Ladegerät 4. Demgegenüber ist das Gerät 2 im Ladezustand LZ ausgeschaltet, empfängt aber noch Energie zum Betrieb des Energiemanagementmoduls 14, und im Entladezustand EZ eingeschaltet und verbraucht entsprechend Energie. Zum Wechseln zwischen dem Ladezustand LZ und dem Entladezustand EZ (in beiden Richtungen) weist das Gerät 2 im gezeigten Ausführung Beispiel noch einen Wartezustand WZ auf, sodass insgesamt vier Betriebszustände AZ, EZ, LZ, WZ möglich sind, welche sich auch gegenseitig ausschließen.

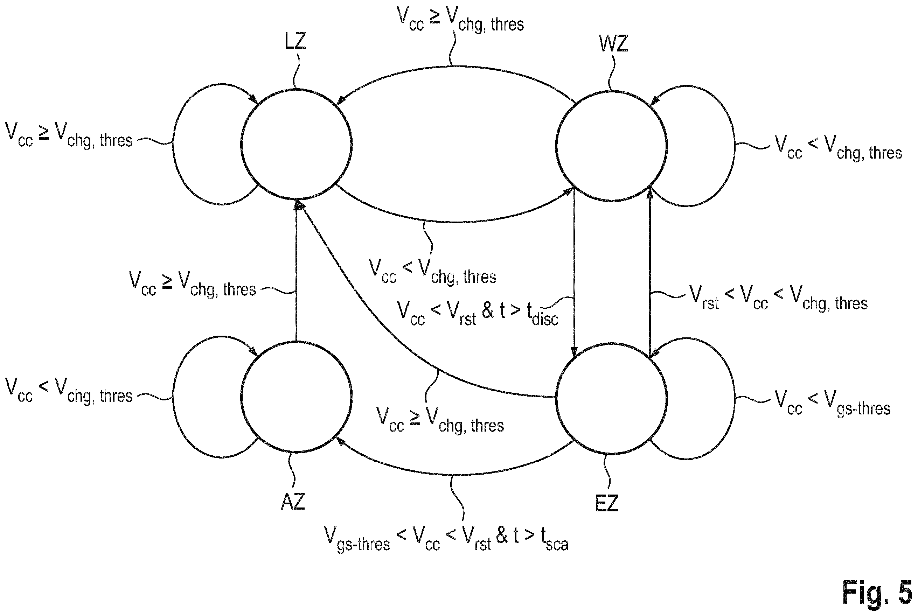

Eine beispielhafte Abhängigkeit der Betriebszustände AZ, EZ, LZ, WZ ist in Fig. 5 gezeigt. Das Gerät 2 wechselt vom Entladezustand EZ, vom Aus-Zustand AZ oder vom Wartezustand WZ in den Ladezustand LZ, wenn die Ladespannung V_{cc} wenigstens der Ladeschwellenspannung V_{chg,thres} entspricht. Solange die Ladespannung V_{cc} wenigstens der Ladeschwellenspannung V_{chg,thres} entspricht bleibt der Ladezustand LZ aktiv. Das Gerät 2 wechselt vom Ladezustand LZ in den Wartezustand WZ, wenn die Ladespannung V_{cc} geringer ist als die Ladeschwellenspannung V_{chg,thres}. Das Gerät 2 wechselt vom Wartezustand WZ in den Entladezustand EZ, wenn die Ladespannung V_{cc} geringer ist als eine Reset-Spannung Vᵣₛₜ und hier noch zusätzlich, wenn auch eine Zeit t verstrichen ist, welche länger ist als eine Entladezeit t_{disc}. Die Reset-Spannung Vᵣₛₜ ist hier eine fest vorgegebene Spannung und ein Parameter des Energiemanagementmoduls 14 und dient dazu, dessen Betrieb zu stoppen und dieses auf einen vordefinierten Standardzustand zu initialisieren. Die Reset-Spannung Vᵣₛₜ wird vorliegend auch genutzt, um festzulegen, wann vom Wartezustand WZ in den Entladezustand EZ gewechselt wird. Die Entladezeit t_{disc} ist beispielsweise eine fest vorgegebene Zeit von wenigen Sekunden. Umgekehrt wechselt das Gerät 2 vom Entladezustand EZ in den Wartezustand WZ, wenn die Ladespannung V_{cc} geringer ist als die Ladeschwellenspannung V_{chg,thres} und größer als die Reset-Spannung Vᵣₛₜ, und vom Wartezustand WZ in den Ladezustand LZ, wenn die Ladespannung V_{cc} wenigstens der Ladeschwellenspannung V_{chg,thres} entspricht. Solange die Ladespannung V_{cc} geringer ist als die Ladeschwellenspannung V_{chg,thres}, bleibt der Wartezustand WZ aktiv.

Das automatische Ausschalten, d.h. ein Wechsel in den Aus-Zustand AZ, ist dadurch realisiert, dass die Ladespannung V_{cc} am Ladeanschluss 10 auf eine Zwischenspannung eingestellt wird, welche eine Gate-Source-Schwellenspannung V_{gs-thres} des Transistors ist und zwischen der Reset-Spannung Vᵣₛₜ und einer Gate-Source-Mindestschwellenspannung V_{gs-thres,min}, d.h. einem Mindestwert für die Gate-Source-Schwellenspannung V_{gs-thres}, liegt. Die Gate-Source-Schwellenspannung V_{gs-thres} ist diejenige Spannung, welche zum Schalten des Transistors erforderlich ist und liegt in einem Bereich zwischen der Gate-Source-Mindestschwellenspannung V_{gs-thres,min} und einer Gate-Source-Maximalschwellenspannung V_{gs-thres,max}. Die Reset-Spannung Vᵣₛₜ ist größer als die tatsächlich genutzte Gate-Source-Schwellenspannung V_{gs-thres}, die Gate-Source-Maximalschwellenspannung V_{gs-thres,max} kann jedoch größer sein als die Reset-Spannung Vᵣₛₜ.

Durch die Gate-Source-Mindestschwellenspannung V_{gs-thres,min} einerseits und die Reset-Spannung Vᵣₛₜ andererseits ist nun für die Zwischenspannung ein Spannungsbereich aufgespannt, welcher zum Wechseln in den Aus-Zustand AZ genutzt wird. Wenn die Ladespannung V_{cc} geringer ist als die Reset-Spannung Vᵣₛₜ, wechselt das Gerät 2 in den Entladezustand EZ. Grundsätzlich ist zunächst der Entladezustand EZ solange aktiv, wie die Ladespannung V_{cc} geringer ist als die Gate-Source-Mindestschwellenspannung V_{gs-thres,min}. Das Gerät 2 wechselt dann in den Aus-Zustand AZ, wenn die Ladespannung V_{cc} geringer ist als die Reset-Spannung Vᵣₛₜ und größer als die Ladeschwellenspannung V_{chg,thres}, und hier noch zusätzlich, wenn auch eine Zeit (während welcher die Zwischenspannung gehalten wird) verstrichen ist, welche länger ist als eine Schaltanschluss-Aktiv-Zeit t_{sca}. Entsprechend wird dann, sobald am Gate 36 die Zwischenspannung erreicht ist, der Transistor geschaltet und der Schaltanschluss 12 auf Masse 34 gezogen. Das Gerät 2 wechselt kurzzeitig in den Entladezustand EZ und von dort aus nach der Schaltanschluss-Aktiv-Zeit t_{sca} in den Aus-Zustand AZ. Die Schaltanschluss-Aktiv-Zeit t_{sca} ist beispielsweise eine fest vorgegebene Zeit von z.B. wenigen Sekunden. Ein Wechsel in den Aus-Zustand AZ ist vorliegend ausschließlich ausgehend vom Entladezustand EZ möglich.

Ein Einschalten des Geräts 2 und speziell ein Wechsel vom Aus-Zustand AZ in den Entladezustand EZ, ist zunächst über den Ladezustand LZ möglich. In der hier gezeigten Ausgestaltung wechselt das Gerät 2 vom Aus-Zustand AZ in den Ladezustand LZ, wenn die Ladespannung V_{cc} wenigstens der Ladeschwellenspannung V_{chg,thres} entspricht. Alternativ oder zusätzlich ist ein Wechsel aus dem Aus-Zustand AZ durch ein manuelles Einschalten des Geräts 2 durch den Nutzers möglich. Hierfür weist das Gerät 2 einen nicht explizit gezeigten Schalter (z.B. wie weiter oben bereits beschrieben).

Die beschriebene Lösung zum automatischen Ausschalten des Geräts 2 ist bei einem kontaktgebundenen Laden ohne weiteres möglich, da hierbei eine galvanische Verbindung besteht, über welche die Zwischenspannung auf einfache Weise einstellbar ist. Bei einem Ladegerät 4 zum drahtlosen Laden wie hier beschrieben ist dies jedoch nicht ohne weiteres möglich, da die Ladespannung V_{cc} nicht direkt vom Ladegerät 4 bereitgestellt wird, sondern von diesem mittels des Sendemoduls 6 lediglich im Gerät 2 induziert wird und somit im Ladegerät 4 selbst nicht unbedingt vorliegt.

Wie in Fig. 2 erkennbar ist, erfolgt beim Laden eine Energieübertragung mittels eines Magnetfelds M, welches mit einer Sendespule 44 des Sendemoduls 6 erzeugt wird und welches mit einer Empfangsspule 46 des Empfangsmoduls 8 empfangen wird. Um dann bei einem drahtlosen Ladegerät 4 die Ladespannung V_{cc} auf die Zwischenspannung einzustellen, wird entsprechend das Sendemodul 6 derart angesteuert, dass im Gerät 2 die Zwischenspannung induziert wird. Das ansonsten zum Laden verwendete Magnetfeld M stellt somit bei entsprechender Ansteuerung zugleich das Ausschaltsignal dar, welches vom Ladegerät 4 an das Gerät 2 gesendet wird.

Das Ladegerät 4 und das Gerät 2 zum drahtlosen Laden bilden zusammen ein drahtloses Ladesystem. Das Empfangsmodul 8 stellt die Ladespannung V_{cc} bereit und gibt diese an das Energiemanagementmodul 14 aus. Die Sendespule 44 im Sendemodul 6 wird allgemein mit einer Stromquelle des Ladegeräts 4 betrieben. Das Empfangsmodul 8 weist hier zudem eine Beschaltung für die Empfangsspule 46 auf, um die Ladespannung V_{cc} zu erzeugen. Die Beschaltung weist hier einen Abstimmkondensator 48, einen Glättungskondensator 50 und eine Schottky-Diode 52 auf.

Die Ladespannung V_{cc} ist von einer Vielzahl an Parametern abhängig, insbesondere vom Strom Iₜₓ zur Sendespule 44, der jeweiligen Induktivität der Sendespule Lₜₓ und der Empfangsspule Lᵣₓ, einer Übertragungsfrequenz f , welche zur Übertragung der Energie mittels des Magnetfelds M genutzt wird, und einem Kopplungsfaktor k. Der Kopplungsfaktor k wiederum ist insbesondere abhängig vom Abstand A und vom Neigungswinkel zwischen der Sendespule 44 und der Empfangsspule 46, d.h. allgemein von der räumlichen Anordnung des Ladegeräts 4 und des Geräts 2 beim Laden. Je geringerer der Abstand A und je geringer der Neigungswinkel, desto größer der Kopplungsfaktor k. Für die Ladespannung V_{cc} gilt allgemein: V_{cc} ∝ 2π · f · k · √(Lₜₓ · Lᵣₓ) · Iₜₓ.

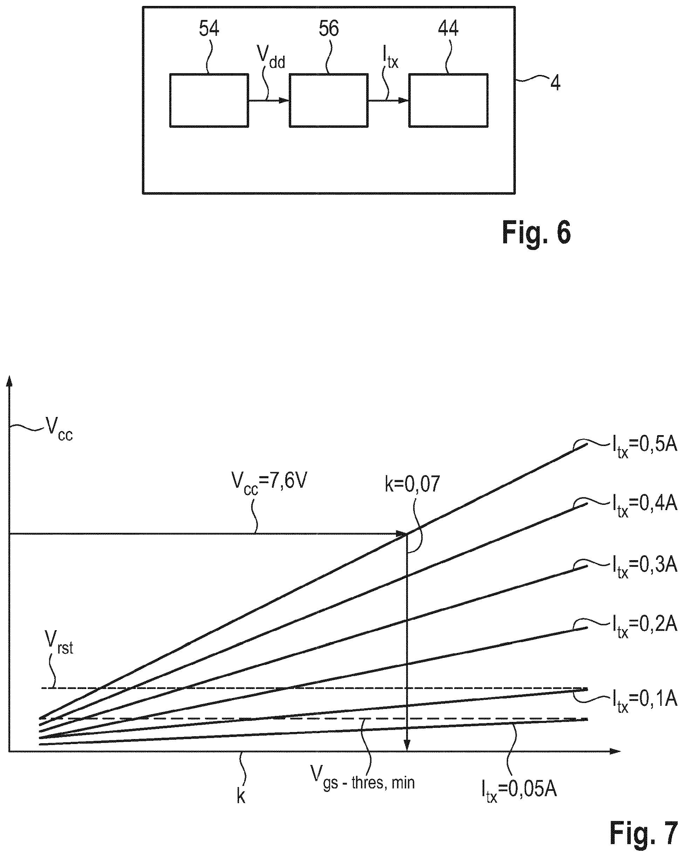

Das Ladegerät 4 weist zum drahtlosen Energietransfer noch einen Umwandler 54 und einen Oszillator 56 auf. Dies ist im Detail in Fig. 6 gezeigt. Der Oszillator 56 erzeugt den Strom Iₜₓ zum Betrieb der Sendespule 44 und ist demnach eine Stromquelle. Die Sendespule 44 und der Oszillator 56 bilden dann das Sendemodul 6. Der Umwandler 54 erzeugt eine Wandlerspannung V_{dd}, zum Betrieb des Oszillators 56. Der Umwandler 54 beeinflusst somit den Strom Iₜₓ, mit welchem die Sendespule 44 betrieben wird. Die Ladespannung V_{cc} und damit auch die Zwischenspannung wird somit mittels der Wandlerspannung V_{dd} eingestellt.

Für feste Werte der Induktivitäten Lₜₓ, Lᵣₓ von Sendespule 44 und Empfangsspule 46 und der Übertragungsfrequenz f steigt die Ladespannung V_{cc} mit steigendem Kopplungsfaktor k sowie andererseits mit steigendem Strom Iₜₓ zur Sendespule 44. Diese beiden Zusammenhänge, nämlich zwischen Ladespannung V_{cc} und Kopplungsfaktor k einerseits und zwischen Ladespannung V_{cc} und Strom Iₜₓ andererseits, werden vorliegend genutzt, um bei bekanntem Kopplungsfaktor k die Ladespannung V_{cc} mittels des Stroms Iₜₓ zu steuern und damit gezielt den Aus-Zustand AZ zu aktivieren. Der Aus-Zustand AZ des Geräts 2 wird dann extern vom Ladegerät 4 durch eine geeignete Steuerung des Umwandlers 54 und Einstellen von dessen Wandlerspannung V_{dd} aktiviert. Der Zusammenhang zwischen Wandlerspannung V_{dd} und Ladespannung V_{cc} ist wie oben beschrieben durch V_{cc} ∝ 2π · f · k · √(Lₜₓ · Lᵣₓ) · Iₜₓ, wobei der Strom Iₜₓ wie beschrieben eine Funktion der Wandlerspannung V_{dd} ist.

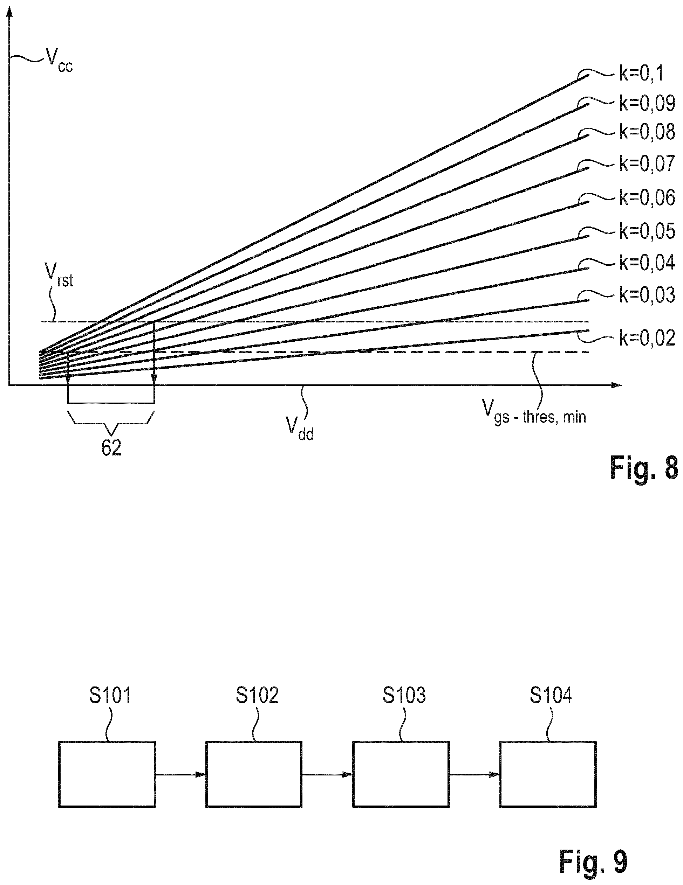

Die Wandlerspannung V_{dd}, welche einzustellen ist, um eine bestimmte Ladespannung V_{cc} und die Zwischenspannung zu erzeugen, ist abhängig von dem Kopplungsfaktor K und kann somit grundsätzlich variieren. Die Induktivitäten Lₜₓ, Lᵣₓ und die Übertragungsfrequenz f sind dagegen für eine gegebene Kombination aus Gerät 2 und Ladegerät 4 bekannt. Vorliegend werden nun zum Erzeugen der Zwischenspannung die Wandlerspannung V_{dd} und somit auch der Strom Iₜₓ eingestellt, indem zunächst der Kopplungsfaktor K bestimmt wird und dann mit diesem diejenige Wandlerspannung V_{dd} bestimmt wird, welche benötigt wird, um die Zwischenspannung zu erzeugen. Dies ist in den Fig. 7 und 8 illustriert und erfolgt anhand des Zusammenhangs zwischen Ladespannung V_{cc} und Wandlerspannung V_{dd}, nämlich V_{cc} ∝ 2π · f · k · √(Lₜₓ · Lᵣₓ) · Iₜₓ(Vdd).

Wie in Fig. 7 gezeigt ist, wird der Kopplungsfaktor k über den Zusammenhang zwischen Ladespannung V_{cc} und Strom Iₜₓ/Wandlerspannung V_{dd} bestimmt, und zwar mit einem bekannten Wertepaar für die Ladespannung V_{cc} und den Strom Iₜₓ. Da die Ladespannung V_{cc} dem Ladegerät 4 nicht bekannt ist, erfolgt zur Ermittlung des Kopplungsfaktors k eine Kommunikation zwischen dem Ladegerät 4 und dem Gerät 2. Am Ende des Ladens sendet das Gerät 2 die zuletzt noch während des Ladens anliegende Ladespannung V_{cc} (genauer gesagt: deren Wert) an das Ladegerät 4. Diese zuletzt noch anliegende Ladespannung V_{cc} wird auch als "finale Ladespannung" V_{cc} bezeichnet. Zudem speichert das Ladegerät 4 denjenigen Strom Iₜₓ (genauer gesagt: dessen Wert), welcher zum Zeitpunkt der finalen Ladespannung V_{cc} zum Betrieb der Sendespule 44 genutzt wird, d.h. den zuletzt noch während des Ladens anliegenden Strom Iₜₓ, welcher analog als finaler Strom Iₜₓ bezeichnet wird. Die finale Ladespannung V_{cc} wird über eine Datenverbindung zwischen dem Gerät 2 und dem Ladegerät 4 gesendet. Hierfür weisen das Gerät 2 und das Ladegerät 4 jeweils eine Kommunikationseinheit 58, 60 auf, z.B. eine Antenne und eine geeignete Schaltung für die Antenne, zum Senden und/oder Empfangen von Daten, speziell der finalen Ladespannung V_{cc}. Das Ladegerät 4 empfängt die finale Ladespannung V_{cc}, woraufhin dann in Kombination mit dem finalen Strom Iₜₓ der Kopplungsfaktor k bestimmt wird, nämlich über den genannten Zusammenhang und z.B. wie in Fig. 7 gezeigt.

Mit der beabsichtigen Zwischenspannung und dem Kopplungsfaktor k wird dann die Wandlerspannung V_{dd} des Umwandlers 54 bestimmt. Da die Zwischenspannung in einem Spannungsbereich zwischen der Reset-Spannung Vᵣₛₜ und der Gate-Source-Mindestschwellenspannung V_{gs-thres,min} liegt, ergibt sich entsprechend wie in Fig. 8 gezeigt auch ein geeigneter Spannungsbereich 62 für die Wandlerspannung V_{dd}, aus welchem dann diese ausgewählt wird, z.B. einfach der Mittelwert des Spannungsbereichs 62.

Zusammenfassend umfasst das hier beschriebene Einstellen der Wandlerspannung V_{dd} somit die in Fig. 9 gezeigten vier Schritte S101 - S104: In einem ersten Schritt S101 werden ein finaler Strom Iₜₓ und eine finale Ladespannung V_{cc} ermittelt. Darauffolgend wird in einem zweiten Schritt S102 der Kopplungsfaktor k anhand des finalen Stroms Iₛₜ und der finalen Ladespannung V_{cc} bestimmt. Darauffolgend wird in einem dritten Schritt S103 mit dem Kopplungsfaktor k und der beabsichtigten Zwischenspannung die hierfür nötige Wandlerspannung V_{dd} bestimmt, welche schließlich in einem vierten Schritt S104 eingestellt wird.

Der zur Bestimmung des Kopplungsfaktors k und der Wandlerspannung V_{dd} jeweils verwendete Zusammenhang ist beispielsweise wie in den Fig. 7 und 8 gezeigte jeweils als parametriertes Funktionsbündel hinterlegt. Zur Bestimmung des Kopplungsfaktors k ist z.B. wie in Fig. 7 gezeigt die Ladespannung V_{cc} als Funktion des Kopplungsfaktors k hinterlegt und mit dem Strom Iₜₓ parametriert, sodass sich ein entsprechendes Funktionsbündel ergibt. Zur Bestimmung der Wandlerspannung V_{dd} ist z.B. wie in Fig. 8 gezeigt die Ladespannung V_{cc} als Funktion der Wandlerspannung V_{dd} hinterlegt und mit dem Kopplungsfaktor k parametriert, sodass sich ein entsprechendes Funktionsbündel ergibt.

Im Beispiel der Fig. 7 beträgt die finale Ladespannung V_{cc} 7,6 V, der zugehörige finale Strom Iₜₓ beträgt 0,5 A. Anhand dieser Werte und in Kombination mit den Induktivitäten Lₜₓ, Lᵣₓ und der Übertragungsfrequenz f wird der Kopplungsfaktor k als k = 0,07 bestimmt. Die Reset-Spannung Vᵣₛₜ beträgt 2 V und die Gate-Source-Mindestschwellspannung V_{gs-thres,min} 1 V, dann ergibt sich für die beabsichtigte Zwischenspannung ein Spannungsbereich zwischen 1 V und 2 V. Für diese Zwischenspannung wird dann gemäß dem Beispiel in Fig. 8 mit dem Kopplungsfaktor k = 0,07 eine Wandlerspannung V_{dd} im Bereich von 0,125 V und 0,275 V bestimmt. Die Wandlerspannung V_{dd} wird dann beispielsweise auf 0,2 V eingestellt, sodass sich im Gerät 2 die entsprechende Zwischenspannung ergibt und das Gerät 2 in den Aus-Zustand AZ wechselt.

Die Gate-Source-Schwellenspannung V_{gs-thres} muss zumindest bereichsweise kleiner ist als die Reset-Spannung Vᵣₛₜ. Für die genannte Reset-Spannung Vᵣₛₜ von 2 V ergibt sich dann, dass ein geeigneter Transistor eine Gate-Source-Mindestschwellenspannung V_{gs-thres,min} von weniger als 2 V aufweist, z.B. 1,4 V oder 0,7 V.

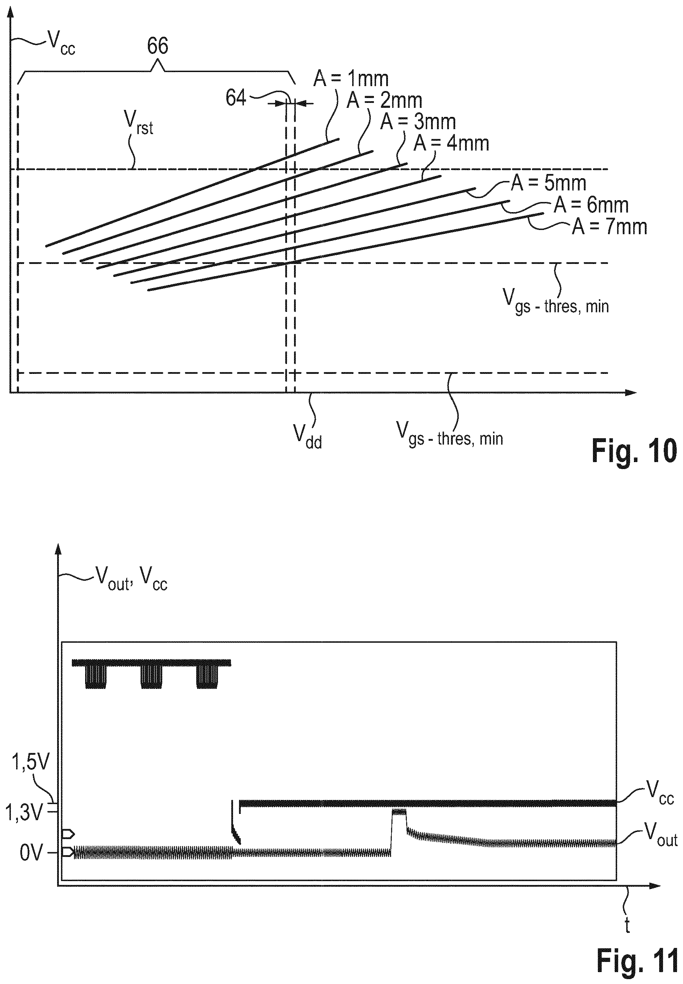

Die Reset-Spannung Vᵣₛₜ definiert für sämtliche Abstände A eine Obergrenze für die Wandlerspannung V_{dd} (der Einfachheit halber wird hier vom Abstand A gesprochen, die Ausführungen gelten jedoch allgemein für die Kopplungskonstante k). Bei der genannten Reset-Spannung Vᵣₛₜ von 2 V beträgt die Obergrenze für die Wandlerspannung V_{dd} beispielsweise 0,69 V. Sofern dies nicht eingehalten werden kann, ist ein automatisches Ausschalten für einige Abstände A unter Umständen nicht möglich. Dies ist in Fig. 10 illustriert. Der Abstand A beträgt zum Laden beispielsweise zwischen 1 mm und 10 mm (in Fig. 10 ist die Ladespannung V_{cc} als Funktion der Wandlerspannung V_{dd} für verschiedene Abstände A von 1 mm bis 7 mm in 1-mm-Schritten gezeigt). Um für alle Abstände A ein automatisches Ausschalten zu ermöglichen, muss die Ladespannung V_{cc} bei jedem Abstand A oberhalb der Gate-Source-Schwellenspannung V_{gs-thres} liegen. Für diejenigen Abstände A, für welche diese Bedingung nicht erfüllt ist, ist ein automatisches Ausschalten nicht möglich. Daraus wird deutlich, dass ein Transistor mit einer möglichst geringen Gate-Source-Mindestschwellenspannung V_{gs-thres,min} ein automatisches Ausschalten für einen deutlich größeren Bereich an Abständen A ermöglicht. Im oben genannten Beispiel mit einem Transistor mit einer Gate-Source-Mindestschwellenspannung V_{gs-thres,min} von 0,685 V beträgt damit der Spannungsbereich 64, welcher für die Wandlerspannung V_{dd} zur Verfügung steht, um für alle Abstände A eine geeignete Zwischenspannung zum automatischen Ausschalten zu erzeugen, lediglich 0,005 V. Eine geringere Wandlerspannung V_{dd} reicht dann möglicherweise nicht mehr aus für ein automatisches Abschalten ist in einem Abstand A von 5 mm oder mehr. Mit einem anderen Transistor, mit einer Gate-Source-Mindestschwellenspannung V_{gs-thres,min} von 0,5 V, beträgt der Spannungsbereich 66, welcher für die Wandlerspannung V_{dd} zur Verfügung steht, um für alle Abstände A eine geeignete Zwischenspannung zum automatischen Ausschalten zu erzeugen, ca. 0,2 V. Damit ist dann ein automatisches Ausschalten im gesamten Bereich von 1 mm bis 10 mm problemlos möglich.

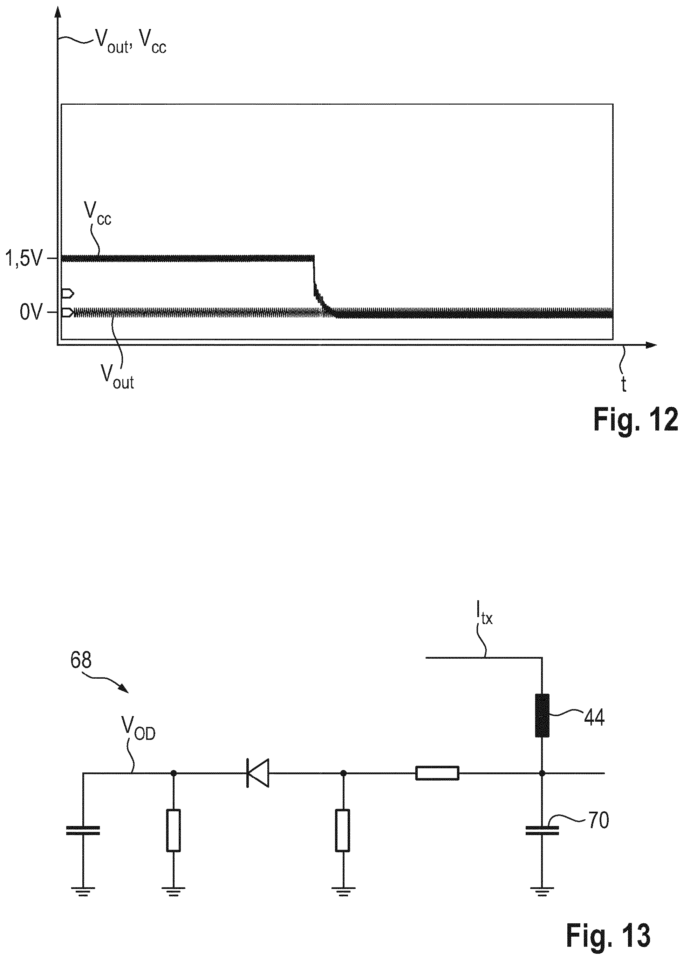

Die Fig. 11 und 12 zeigen jeweils eine Oszilloskop-Messung in einem beispielhaften Anwendungsfall. Dabei sind jeweils die Ladespannung V_{cc} und die Spannung Vₒᵤₜ, welche vom Energiemanagementmodul 14 an die Verbraucher 18 ausgegeben wird, als Funktion der Zeit t gezeigt. Der Abstand A der Sendespule 44 zur Empfangsspule 46 beträgt hier 4 mm. Das Gerät 2 wechselt zunächst in den Ladezustand LZ und wird geladen. Zum automatischen Ausschalten wird dann wie in Fig. 11 gezeigt die Wandlerspannung V_{dd} des Umwandlers 54 auf 0,6 V eingestellt. Die Ladespannung V_{cc} im Gerät 2 wird damit auf eine Zwischenspannung von 1,5 V eingestellt. Das Gerät 2 wechselt zunächst in den Entladezustand EZ und beginnt wenige Sekunden später Energie zu verbrauchen, wofür das Energiemanagementmodul 14 an die Verbraucher 18 eine Spannung Vₒᵤₜ von z.B. 1,3 V bereitstellt. Dann wechselt das Gerät 2 in den Aus-Zustand AZ, welcher dann in Fig. 12 aktiv ist. Nach wenigen Sekunden (z.B. ≥ 6 s) wird die Wandlerspannung V_{dd} dann auf 0 V eingestellt, um den Umwandler 54 auszuschalten, sodass dann auch wie in Fig. 12 gezeigt die Ladespannung V_{cc} 0 V beträgt. Das Ladegerät 4 kann nun insgesamt ausgeschaltet werden und vom Gerät 2 getrennt werden, wobei das Gerät 2 dann weiterhin im Aus-Zustand AZ verharrt, ohne zurück in den Entladezustand EZ zu wechseln, obwohl die Ladespannung V_{cc} dann 0 V beträgt.

Wie bereits beschrieben, weisen das Gerät 2 und das Ladegerät 4 jeweils eine 58, 60 Kommunikationseinheit auf, zum Austausch von Daten. Die Kommunikationseinheit 60 des Ladegeräts 4 bildet mit der Kommunikationseinheit 58 des Geräts 2 ein Kommunikationssystem zum Datenaustausch. Das Kommunikationssystem dient vorliegend dazu, Daten betreffend die Ladespannung V_{cc} vom Gerät 2 an das Ladegerät 4 zu übermitteln. Entsprechend kann das Kommunikationssystem bidirektional ausgebildet sein oder lediglich monodirektional vom Gerät 2 zum Ladegerät 4. Das Kommunikationssystem ist hier drahtlos und verwendet ein entsprechendes Kommunikationsprotokoll, beispielsweise magnetische Induktion. Vorliegend werden die Daten vom Gerät 2 zur Übertragung moduliert. Die Daten, welche übertragen werden, sind z.B. Ladezustand (SOC = "state of charge"), aktuelle Spannung, aktueller Ladestrom, Temperatur, die bereits beschriebene Ladespannung V_{cc} des Energiespeichers 16 oder eine Kombination hiervon. Das Ladegerät 4 empfängt die Daten und demoduliert diese. Hierzu weist das Ladegerät 4 eine Demodulatorschaltung 68 auf, z.B. wie in Fig. 13 gezeigt. Mit der dort gezeigten Demodulatorschaltung 68 auch der Strom Iₜₓ im Sendemodul 6 bestimmt, genauer gesagt der Strom Iₜₓ durch die Sendespule 44, welche hierzu in die Demodulatorschaltung 68 integriert ist. Hierzu weist die Demodulatorschaltung 68 einen Kondensator 70 auf, an welchem sich der Strom Iₜₓ als Verhältnis einer maximalen Objekterkennungsspannung V_{OD} der Demodulatorschaltung 68 und dessen Impedanz bei der Übertragungsfrequenz f der Sendespule 44 ergibt.

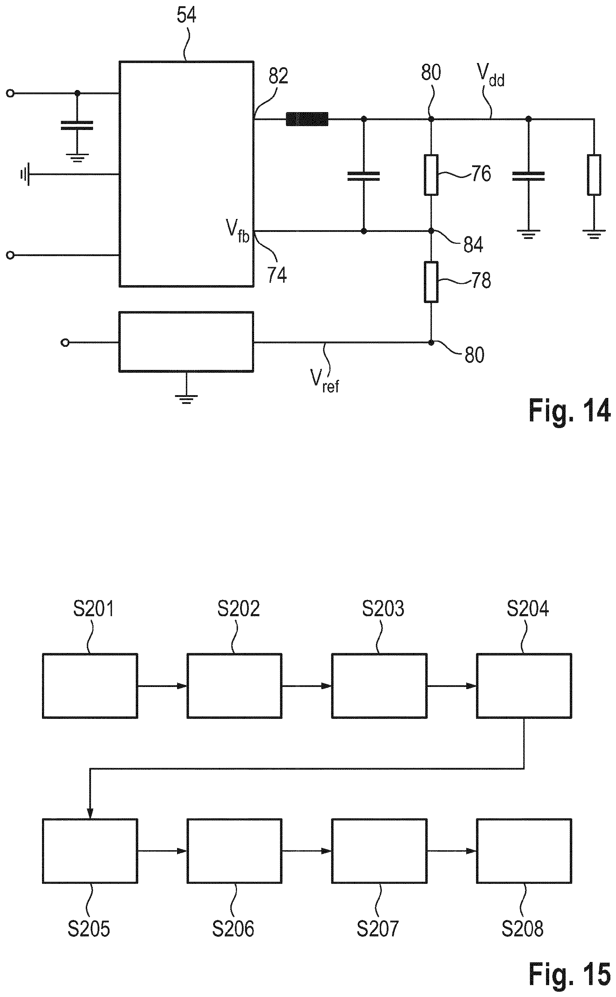

Der Umwandler 54 gibt im Falle eines kontaktgebundenen automatischen Ausschaltens als Wandlerspannung V_{dd} eine Spannung zwischen der Reset-Spannung Vᵣₛₜ und der Gate-Source-Mindestschwellenspannung V_{gs-thres,min} aus, um das Gerät 2 auszuschalten. Dieser Spannungsbereich für die Wandlerspannung V_{dd} ist jedoch beim drahtlosen automatischen Ausschalten nicht unbedingt anwendbar, da in diesem Fall zum Ausschalten eine geringere Wandlerspannung V_{dd} erforderlich ist. Beim drahtlosen automatischen Ausschalten ist die Wandlerspannung V_{dd} des Umwandlers 54 eine Eingangsspannung für den Oszillator 56, welcher die Wandlerspannung V_{dd} verstärkt, sodass sich im Gerät 2 letztendlich eine entsprechend größere Ladespannung V_{cc} ergibt, besonders dann, wenn die Empfangsspule 46 mehr Windungen als die Sendespule 44 aufweist. Die Wandlerspannung V_{dd} ist daher im Falle des drahtlosen automatischen Ausschaltens deutlich geringer als im Falle des kontaktgebundenen automatischen Ausschaltens und liegt z.B. im Millivoltbereich. Der Umwandler 54 ist typischerweise nicht in der Lage, eine Wandlerspannung V_{dd} unterhalb einer bezüglich des Umwandlers 54 internen Feedback-Referenzspannung V_{fb} zu erzeugen, welche regelmäßig wenigstens 0,6 V beträgt. Daher weist das hier gezeigte Ladegerät 4 zusätzlich zum Umwandler 54 eine Spannungsreferenzschaltung 72 auf, um insgesamt eine Wandlerspannung V_{dd} unterhalb der Feedback-Referenzspannung V_{fb} des Umwandlers 54 zu erzeugen. Ein Ausführungsbeispiel für eine solche Spannungsreferenzschaltung 72 ist in Fig. 14 gezeigt und weist eine bezüglich des Umwandlers 54 externe Referenzspannung V_{ref} auf, welche an einen Feedback-Anschluss 74 des Umwandlers 54 angeschlossen ist. Die externe Referenzspannung V_{ref} ist größer als die interne Feedback-Referenzspannung V_{fb}. Die Spannungsreferenzschaltung 72 ist dann derart ausgebildet und mit dem Umwandler 54 verbunden, dass sich die Wandlerspannung V_{dd} ergibt als Differenz der internen Feedback-Referenzspannung V_{fb} einerseits und der mit einem geeigneten Widerstandsverhältnis R1/R2 zweier Widerstände 76, 78 gewichteten Differenz aus externer Referenzspannung V_{ref} und interner Feedback-Referenzspannung V_{fb} andererseits, d.h. V_{dd} = V_{fb} - R1 · (V_{ref} - V_{fb})/R2. Die beiden Widerstände 76, 78 bilden einen Spannungsteiler, mit zwei Endpunkten 80, an welchen ein Ausgang 82 des Umwandlers 54 einerseits und die externe Referenzspannung V_{ref} andererseits angeschlossen sind, und mit einem Mittenpunkt 84 zwischen den beiden Widerständen 76, 78, an welchen der Feedback-Anschluss 74angeschlossen ist.

Das Ladegerät 4 weist weiter eine Steuereinheit 86 auf, an welche die Kommunikationseinheit 58 und der Umwandler 54 angeschlossen sind. Mittels der Steuereinheit 86 wird der Umwandler 54 eingestellt, nämlich basierend auf den Daten, welche mittels der Kommunikationseinheit 58 empfangen wurden. Optional weist das Ladegerät 4 noch einen Notfall-Energiespeicher 88 auf, um bei einer Unterbrechung der Energieversorgung zum Ladegerät 4 dennoch die Zwischenspannung einzustellen und hierfür das Ausschaltsignal zu erzeugen.

Die Steuereinheit 86 ist in einer Ausgestaltung ausgebildet, einen oder mehrere der hier beschriebenen Schritte des Verfahrens auszuführen. Auch das Gerät 2 weist eine Steuereinheit 90 auf, welche in einer Ausgestaltung ausgebildet ist, einen oder mehrere der hier beschriebenen Schritte des Verfahrens auszuführen.

Insgesamt wird durch die Ausschalt-Schaltung 22 in Kombination mit dem Kommunikationssystem ein Verfahren realisiert, bei welchem initiiert vom Ladegerät 4 ein drahtloses automatisches Ausschalten des Geräts 2 erfolgt, speziell am Ende eines Ladens des Energiespeichers 16 des Geräts 2 und allgemein bei einer Unterbrechung der Energieübertragung vom Ladegerät 4 zum Gerät 2. Das Verfahren weist hierzu beispielsweise einen oder mehrere der in Fig. 15 gezeigten Schritte auf, bevorzugterweise in der genannten Reihenfolge. In einem ersten Schritt S201 sendet das Gerät 2 Daten an das Ladegerät 4, z.B. wiederkehrend. In einem zweiten Schritt S202 werden die Daten analysiert, z.B. von der Steuereinheit 86. Sofern die Daten moduliert sind, werden diese zuvor im zweiten Schritt S202 z.B. mit der beschriebenen Demodulatorschaltung 68 demoduliert. In einem dritten Schritt S203 wird der Umwandler 54 basierend auf den Daten eingestellt, z.B. von der Steuereinheit 86. Die Steuereinheit 86 stellt den Umwandler 54 beispielsweise mit einem DAC-Signal oder einem PWM-Signal ein. In einem vierten Schritt S204 gibt der Umwandler 54 daraufhin eine Wandlerspannung V_{dd} an den Oszillator 56 aus und steuert diesen dadurch. Ebenfalls im vierten Schritt S204 gibt der Oszillator 56 einen Strom Iₜₓ aus, mit welchem dann die Sendespule 44 betrieben wird. Der Strom Iₜₓ wird somit im vierten Schritt S204 mittelbar vom Umwandler 54 eingestellt. In einem fünften Schritt S205 erzeugt die Sendespule 44 abhängig vom Strom Iₜₓ ein Magnetfeld M. In einem sechsten Schritt S206 wird das Magnetfeld M von der Empfangsspule 46 empfangen, welche abhängig davon eine Ladespannung V_{cc} im Gerät 2 erzeugt, sodass insgesamt das Ladegerät 4 im Gerät 2 eine Ladespannung V_{cc} induziert. In einem siebten Schritt S207 wird dann das Gerät 2 ausgeschaltet, falls die Ladespannung V_{cc} im Spannungsbereich zwischen der Reset-Spannung Vᵣₛₜ und der Gate-Source-Mindestschwellenspannung V_{gs-thres,min} liegt, falls also die Ladespannung V_{cc} eine Zwischenspannung wie beschrieben ist. Bei Vorliegen einer Zwischenspannung wechselt demnach das Gerät 2 im siebten Schritt S207 in den Aus-Zustand AZ und ist dann ausgeschaltet. Im siebten Schritt S207 wechselt das Gerät 2 optional erst dann in den Aus-Zustand AZ, wenn zusätzlich noch wie beschrieben eine Zeit t verstrichen ist, welche länger ist als eine Schaltanschluss-Aktiv-Zeit t_{sca}. Letztendlich erfolgt das automatische Ausschalten abhängig von den Daten, welche das Gerät 2 an das Ladegerät 4 sendet. In einem optionalen achten Schritt S208 wird schließlich noch der Umwandler 54 ausgeschaltet, vorzugsweise eine bestimmte Zeit t, z.B. 10 s, nachdem das Gerät 2 in den Aus-Zustand AZ gewechselt ist.

Bisher wurde beschrieben, dass das Gerät 2 ausgeschaltet wird, wenn das Laden beendet ist. Die Daten enthalten dann wenigstens die finale Ladespannung V_{cc}, welche in Verbindung mit dem finalen Strom Iₜₓ bestimmt wird und auch in Kombination mit diesem insbesondere von der Steuereinheit 88 verwendet wird, um eine Wandlerspannung V_{dd} zu bestimmen und den Umwandler einzustellen. Grundsätzlich ebenfalls geeignet zur Initiierung des automatischen Ausschaltens sind jedoch auch andere Ereignisse als das Ende des Ladens, z.B. wenn eine Temperatur des Energiespeichers 16 eine Grenztemperatur überschreitet (Überhitzung), wenn Spannung oder Strom am Energiespeicher 16 einen entsprechenden Grenzwert überschreiten (Überspannung/Überstrom), generell bei einem Fehler des Energiespeichers 16 (Fehlerfall), oder ähnliche Ereignisse. Die Steuereinheit 86 schließt dann auf eines oder mehrere dieser Ereignisse, wenn die Steuereinheit 86 die Daten analysiert, und steuert dann den Umwandler 54 entsprechend an, um das automatische Ausschalten zu initiieren.

### Bezugszeichenliste

- 2: Gerät
- 4: Ladegerät
- 6: Sendemodul
- 8: Empfangsmodul
- 10: Ladeanschluss
- 12: Schaltanschluss
- 14: Energiemanagementmodul
- 16: Energiespeicher
- 18: Verbraucher
- 20: Schalter
- 22: Ausschalt-Schaltung
- 24: Mikrofon
- 26: Hörer
- 28: Vertiefung
- 30: Deckel
- 32: Transformationseinheit
- 34: Masse
- 36: Gate
- 38: Source
- 40: Drain
- 42: Widerstand
- 44: Sendespule
- 46: Empfangsspule
- 48: Abstimmkondensator
- 50: Glättungskondensator
- 52: Schottky-Diode
- 54: Umwandler
- 56: Oszillator
- 58: Kommunikationseinheit (des Geräts)
- 60: Kommunikationseinheit (des Ladegeräts)
- 62: Spannungsbereich (für Wandlerspannung)
- 64: Spannungsbereich
- 66: Spannungsbereich
- 68: Demodulatorschaltung
- 70: Kondensator
- 72: Spannungsreferenzschaltung
- 74: Feedback-Anschluss
- 76: Widerstand
- 78: Widerstand
- 80: Endpunkt
- 82: Ausgang
- 84: Mittenpunkt
- 86: Steuereinheit (des Ladegeräts)
- 88: Notfall-Energiespeicher
- 90: Steuereinheit (des Geräts)

- A: Abstand
- AZ: Aus-Zustand
- EZ: Entladezustand
- Iₜₓ: Strom
- k: Kopplungsfaktor
- Lᵣₓ: Induktivität der Empfangsspule
- Lₜₓ: Induktivität der Sendespule
- LZ: Ladezustand
- M: Magnetfeld
- S101 - S104: Schritt
- S201 - S208: Schritt
- t_{disc}: Entladezeit
- t_{sca}: Schaltanschluss-Aktiv-Zeit
- V_{bat}: Spannung
- V_{cc}: Ladespannung
- V_{chg,thres}: Ladeschwellenspannung
- V_{dd}: Wandlerspannung
- V_{fb}: Feedback-Referenzspannung
- V_{gs-thres}: Gate-Source-Schwellenspannung
- V_{gs-thres,max}: Gate-Source-Maximalschwellenspannung
- V_{gs-thres,min}: Gate-Source-Mindestschwellenspannung
- V_{OD}: Objekterkennungsspannung
- Vₒᵤₜ: Spannung (vom Energiemanagementmodul an Verbraucher)
- V_{ref}: Referenzspannung
- Vᵣₛₜ: Reset-Spannung
- WZ: Wartezustand
- t: Zeit

## Patentansprüche

1. Verfahren,
- wobei ein Gerät (2) mit einem Ladegerät (4) verbunden ist,
- wobei das Gerät einen Ladezustand (LZ) aufweist, in welchem ein drahtloses Laden erfolgt, indem mit einem Sendemodul (6) des Ladegeräts (4) an ein Empfangsmodul (8) des Geräts (2) drahtlos Energie übertragen wird,
- wobei das Gerät (2) einen Entladezustand (EZ) aufweist, in welchem Energie verbraucht wird,
**dadurch gekennzeichnet,**
- **dass** das Gerät (2) einen Ladeanschluss (10) aufweist, an welchem zum Laden eine Ladespannung (V_{cc}) anliegt, welche mit dem Ladegerät (4) einstellbar ist,
- **dass** das Gerät (2) einen Schaltanschluss (12) aufweist, zum Ein- und Ausschalten des Geräts (2),
- **dass** der Ladeanschluss (10) und der Schaltanschluss (12) Anschlüsse eines Energiemanagementmoduls (14) des Geräts (2) sind,
- **dass** das Gerät (2) einen Schalter (20) aufweist, welcher mit dem Schaltanschluss (12) verbunden ist und welcher mit der Ladespannung (V_{cc}) schaltbar ist, indem die Ladespannung (V_{cc}) auf eine Zwischenspannung eingestellt wird,
- **dass** das Ladegerät (4) die Ladespannung (V_{cc}) auf die Zwischenspannung einstellt, sodass der Schalter (20) geschaltet wird und das Gerät (2) in einen Aus-Zustand (AZ) wechselt, in welchem das Gerät (2) ausgeschaltet ist.

2. Verfahren nach Anspruch 1,
wobei das Laden beendet wird, wenn die Ladespannung (V_{cc}) eine Ladeschwellenspannung (V_{chg,thres}) unterschreitet.

3. Verfahren nach Anspruch 2,
wobei das Gerät (2) von dem Entladezustand (EZ), oder von dem Aus-Zustand (AZ) in den Ladezustand (LZ) wechselt, wenn die Ladespannung (V_{cc}) wenigstens der Ladeschwellenspannung (V_{chg,thres}) entspricht

4. Verfahren nach Anspruch 2 oder 3,
wobei das Gerät (2) von dem Ladezustand (LZ) in einen Wartezustand (WZ) wechselt, wenn die Ladespannung (V_{cc}) geringer ist als die Ladeschwellenspannung (V_{chg,thres}) und von dem Wartezustand (WZ) in den Entladezustand (EZ), wenn die Ladespannung (V_{cc}) geringer ist als eine Reset-Spannung (Vᵣₛₜ).

5. Verfahren nach einem der Ansprüche 1 bis 4,
wobei der Schalter (20) ein Transistor ist, mit einem Gate (36), einer Source (38) und einem Drain (40),
wobei das Gate (36) mit dem Ladeanschluss (10) verbunden ist und mit einem Widerstand (42) auf die Ladespannung (V_{cc}) hochgezogen ist,
wobei der Widerstand (42) das Gate (36) mit der Source (38) und mit Masse (34) verbindet,
wobei der Drain (40) mit dem Schaltanschluss (12) verbunden ist und die Source (38) mit Masse (34).

6. Verfahren nach einem der Ansprüche 1 bis 5,
wobei beim Laden eine Energieübertragung mittels eines Magnetfelds (M) erfolgt, welches mit einer Sendespule (44) des Sendemoduls (6) erzeugt wird und welches mit einer Empfangsspule (46) des Empfangsmoduls (8) empfangen wird, wobei, um die Ladespannung (V_{cc}) auf die Zwischenspannung einzustellen, das Sendemodul (6) derart angesteuert wird, dass im Gerät (2) die Zwischenspannung induziert wird.

7. Verfahren nach Anspruch 6,
wobei das Ladegerät (4) einen Umwandler (54) und einen Oszillator (56) aufweist,
wobei der Oszillator (56) einen Strom (Iₜₓ) erzeugt, zur Erzeugung des Magnetfelds (M) mit dem Sendemodul (6),
wobei der Umwandler (54) eine Wandlerspannung (V_{dd}) erzeugt, zum Betrieb des Oszillators (56),
wobei die Ladespannung (V_{cc}) mittels der Wandlerspannung (V_{dd}) eingestellt wird.

8. Verfahren nach Anspruch 7,
wobei die Wandlerspannung (V_{dd}) abhängig von einem Kopplungsfaktor (k) zwischen dem Sendemodul (6) und dem Empfangsmodul (8) ist,
wobei zum Erzeugen der Zwischenspannung die Wandlerspannung (V_{dd}) eingestellt wird, indem zunächst der Kopplungsfaktor (k) bestimmt wird und dann mit diesem diejenige Wandlerspannung (V_{dd}) bestimmt wird, welche benötigt wird, um die Zwischenspannung zu erzeugen.

9. Verfahren nach Anspruch 8,
wobei das Gerät (2) die zuletzt noch während des Ladens anliegende Ladespannung (V_{cc}) als finale Ladespannung (V_{cc}) an das Ladegerät (4) sendet, wobei das Ladegerät (4) denjenigen Strom (Iₜₓ), welcher zum Zeitpunkt der finalen Ladespannung (V_{cc}) zum Betrieb der Sendespule (44) genutzt wird, als finalen Strom (Iₜₓ) speichert,
wobei das Ladegerät (4) die finale Ladespannung (V_{cc}) empfängt, woraufhin dann in Kombination mit dem finalen Strom (Iₜₓ) der Kopplungsfaktor (k) bestimmt wird.

10. Verfahren nach einem der Ansprüche 1 bis 9,
wobei das Gerät (2) und das Ladegerät (4) jeweils eine Kommunikationseinheit (58, 60) aufweisen, zum Austausch von Daten,
wobei die Daten vom Gerät (2) zur Übertragung moduliert werden,
wobei das Ladegerät (4) die Daten empfängt und demoduliert,
wobei das Ladegerät (4) zur Demodulierung eine Demodulatorschaltung (69) aufweist, mit welcher auch der Strom (Iₜₓ) im Sendemodul (6) bestimmt wird.

11. Verfahren nach einem der Ansprüche 1 bis 10,
wobei das Ladegerät (4) zusätzlich zum Umwandler (54) eine Spannungsreferenzschaltung (72) aufweist, um insgesamt eine Wandlerspannung (V_{dd}) unterhalb einer Feedback-Referenzspannung (V_{fb}) des Umwandlers (54) zu erzeugen.

12. Verfahren nach einem der Ansprüche 1 bis 11,
wobei das Ladegerät (4) einen Notfall-Energiespeicher (88) aufweist, um bei einer Unterbrechung der Energieversorgung zum Ladegerät (4) dennoch die Zwischenspannung einzustellen.

13. Gerät (2) und Ladegerät (4), welche ausgebildet sind zur Durchführung eines Verfahrens gemäß einem der Ansprüche 1 bis 12.

14. Gerät (2) und Ladegerät (4) nach Anspruch 13,
wobei das Gerät (2) als ein Hörgerät ausgebildet ist.

## Claims

1. Method,
- wherein a device (2) is connected to a charger (4),
- wherein the device assumes a charging state (LZ), in state which wireless charging is executed, wherein, by means of a transmitter module (6) of the charger (4), energy is transmitted to a receiver module (8) of the device (2), in a wireless arrangement,
- wherein the device (2) assumes a discharging state (EZ), in which state energy is consumed,
**characterized in that**
- the device (2) comprises a charging terminal (10) to which, for the purposes of charging, a charging voltage (V_{cc}) is applied, which voltage is adjustable by means of the charger (4),
- the device (2) comprises a switching terminal (12) for the switch-on and switch-off of the device (2),
- the charging terminal (10) and the switching terminal (12) are terminals of an energy management module (14) of the device (2),
- the device (2) comprises a switch (20), which switch is connected to the switching terminal (12) and is switchable by means of the charging voltage (V_{cc}), wherein the charging voltage (V_{cc}) is adjusted to an intermediate voltage,
- the charger (4) adjusts the charging voltage (V_{cc}) to the intermediate voltage, such that the switch (20) is switched and the device (2) executes a switchover to an OFF state (AZ), in which the device (2) is switched off.

2. Method according to Claim 1,
wherein charging is terminated, in the event that the charging voltage (V_{cc}) undershoots a charging threshold voltage (V_{chg,thres}).

3. Method according to Claim 2,
wherein the device (2) executes a switchover from the discharging state (EZ), or from the OFF state (AZ), to the charging state (LZ), if the charging voltage (V_{cc}) at least corresponds to the charging threshold voltage (V_{chg,thres}) .

4. Method according to Claim 2 or 3,
wherein the device (2) executes a switchover from charging state (LZ) to an idle state (WZ), if the charging voltage (V_{cc}) is lower than the charging threshold voltage (V_{chg,thres}), and from the idle state (WZ) to the discharging state (EZ), if the charging voltage (V_{cc}) is lower than a reset voltage (Vᵣₛₜ).

5. Method according to one of Claims 1 to 4,
wherein the switch (20) is a transistor, having a gate (36), a source (38) and a drain (40),
wherein the gate (36) is connected to the charging terminal (10) and is pulled up to the charging voltage (V_{cc}) by means of a resistor (42),
wherein the resistor (42) connects the gate (36) to the source (38) and to ground (34),
wherein the drain (40) is connected to the switching terminal (12), and the source (38) is connected to ground (34).

6. Method according to one of Claims 1 to 5,
wherein, during charging, an energy transfer is executed by means of a magnetic field (M), which field is generated using a transmitter coil (44) of the transmitter module (6) and is received by a receiver coil (46) of the receiver module (8), and wherein, in order to execute the adjustment of the charging voltage (V_{cc}) to the intermediate voltage, the transmitter module (6) is correspondingly actuated, such that the intermediate voltage is induced in the device (2).

7. Method according to Claim 6,
wherein the charger (4) comprises a converter (54) and an oscillator (56),
wherein the oscillator (56) generates a current (Iₜₓ) for the generation of the magnetic field (M) by means of the transmitter module (6),
wherein the converter (54) generates a converter voltage (V_{dd}) for the operation of the oscillator (56),
wherein the charging voltage (V_{cc}) is adjusted by means of the converter voltage (V_{dd}).

8. Method according to Claim 7,
wherein the converter voltage (V_{dd}) is dependent upon a coupling factor (k) between the transmitter module (6) and the receiver module (8),
wherein, for the generation of the intermediate voltage, the converter voltage (V_{dd}) is adjusted, wherein the coupling factor (k) is initially determined and then, by means thereof, that converter voltage (V_{dd}) is determined which is required for the generation of the intermediate voltage.

9. Method according to Claim 8,
wherein the device (2) transmits the ultimate charging voltage (V_{cc}) applied during charging to the charger (4), by way of the final charging voltage (V_{cc}), wherein the charger (4) saves that current (Iₜₓ) which is employed at the time of the final charging voltage (V_{cc}) for operating the transmitter coil (44), by way of the final current (Iₜₓ),
wherein the charger (4) receives the final charging voltage (V_{cc}), whereafter, in combination with the final current (Iₜₓ), the coupling factor (k) is then determined.

10. Method according to one of Claims 1 to 9,
wherein the device (2) and the charger (4) respectively comprise a communications unit (58, 60) for the exchange of data,
wherein data are modulated by the device (2) for transmission,
wherein the charger (4) receives and demodulates data,
wherein the charger (4), for the purposes of demodulation, incorporates a demodulator circuit (69), by means of which the current (Iₜₓ) in the transmitter module (6) is also determined.

11. Method according to one of Claims 1 to 10,
wherein the charger (4), additionally to the converter (54), comprises a voltage reference circuit (72), in order to a generate a converter voltage (V_{dd}) which, overall, lies below a feedback reference voltage (V_{fb}) of the converter (54).

12. Method according to one of Claims 1 to 11,
wherein the charger (4) comprises a back-up energy store (88), in order to enable the adjustment of the intermediate voltage notwithstanding an interruption of the energy supply to the charger (4).

13. Device (2) and charger (4) for executing a method according to one of Claims 1 to 12.

14. Device (2) and charger (4) according to Claim 13, wherein the device (2) is configured in the form of a hearing aid.

## Revendications

1. Procédé,
- un appareil (2) étant connecté à un chargeur (4),
- l'appareil présentant un état de charge (LZ) dans lequel est effectuée une charge sans fil en transmettant sans fil de l'énergie avec un module d'émission (6) du chargeur (4) à un module de réception (8) de l'appareil (2),
- l'appareil (2) présentant un état de décharge (EZ) dans lequel de l'énergie est consommée,
**caractérisé en ce**
- **que** l'appareil (2) possède une borne de charge (10) à laquelle est appliquée une tension de charge (V_{cc}) pour la charge, laquelle est réglable avec le chargeur (4),
- **que** l'appareil (2) possède une borne de commutation (12) destinée à allumer et à éteindre l'appareil (2),
- **que** la borne de charge (10) et la borne de commutation (12) sont des bornes d'un module de gestion d'énergie (14) de l'appareil (2),
- **que** l'appareil (2) possède un commutateur (20), lequel est relié à la borne de commutation (12) et lequel peut être commuté avec la tension de charge (V_{cc}) en réglant la tension de charge (V_{cc}) à une tension intermédiaire,
- **que** le chargeur (4) règle la tension de charge (V_{cc}) à la tension intermédiaire, de sorte que le commutateur (20) soit activé et que l'appareil (2) passe à un état d'arrêt (AZ) dans lequel l'appareil (2) est éteint.

2. Procédé selon la revendication 1,
la charge prenant fin lorsque la tension de charge (V_{cc}) devient inférieure à une tension de seuil de charge (V_{chg,thres}).

3. Procédé selon la revendication 2,
l'appareil (2) passant de l'état de décharge (EZ) ou de l'état d'arrêt (AZ) à l'état de charge (LZ) lorsque la tension de charge (V_{cc}) correspond au moins à la tension de seuil de charge (V_{chg,thres}).

4. Procédé selon la revendication 2 ou 3,
l'appareil (2) passant de l'état de charge (LZ) à un état d'attente (WZ) lorsque la tension de charge (V_{cc}) est inférieure à la tension de seuil de charge (V_{chg,thres}) et de l'état d'attente (WZ) à l'état de décharge (EZ) lorsque la tension de charge (V_{cc}) est inférieure à une tension de réinitialisation (Vᵣₛₜ).

5. Procédé selon l'une des revendications 1 à 4,
le commutateur (20) étant un transistor, comprenant une grille (36), une source (38) et un drain (40),
la grille (36) étant connectée à la borne de charge (10) et étant élevée à la tension de charge (V_{cc}) avec une résistance (42),
la résistance (42) connectant la grille (36) à la source (38) et à la masse (34),
le drain (40) étant connecté à la borne de commutation (12) et la source (38) à la masse (34).

6. Procédé selon l'une des revendications 1 à 5,
lors de la charge, une transmission d'énergie étant effectuée au moyen d'un champ magnétique (M), lequel est généré avec une bobine d'émission (44) du module d'émission (6) et lequel est reçu avec une bobine de réception (46) du module de réception (8), le module d'émission (6), en vue de régler la tension de charge (V_{cc}) à la tension intermédiaire, étant commandé de telle sorte que la tension intermédiaire est induite dans l'appareil (2).

7. Procédé selon la revendication 6,
le chargeur (4) possédant un convertisseur (54) et un oscillateur (56),
l'oscillateur (56) générant un courant (Iₜₓ) destiné à générer le champ magnétique (M) avec le module d'émission (6),
le convertisseur (54) générant une tension de convertisseur (V_{dd}) pour faire fonctionner l'oscillateur (56),
la tension de charge (V_{cc}) étant réglée au moyen de la tension de convertisseur (V_{dd}).

8. Procédé selon la revendication 7,
la tension de convertisseur (V_{dd}) étant dépendante d'un facteur de couplage (k) entre le module d'émission (6) et le module de réception (8),
en vue de générer la tension intermédiaire, la tension de convertisseur (V_{dd}) étant réglée en déterminant tout d'abord le facteur de couplage (k), puis en déterminant avec celui-ci la tension de convertisseur (V_{dd}) qui est nécessaire pour générer la tension intermédiaire.

9. Procédé selon la revendication 8,
l'appareil (2) envoyant la dernière tension de charge (V_{cc}) encore présente pendant la charge au chargeur (4) en tant que tension de charge finale (V_{cc}),
le chargeur (4) mémorisant en tant que courant final (Iₜₓ) le courant (Iₜₓ) qui est utilisé au moment de la tension de charge finale (V_{cc}) pour faire fonctionner la bobine d'émission (44),
le chargeur (4) recevant la tension de charge finale (V_{cc}), après quoi, en combinaison avec le courant final (Iₜₓ), le facteur de couplage (k) est déterminé.

10. Procédé selon l'une des revendications 1 à 9,
l'appareil (2) et le chargeur (4) possédant respectivement une unité de communication (58, 60) destinée à l'échange de données,
les données de l'appareil (2) étant modulées pour la transmission,
le chargeur (4) recevant et démodulant les données,
le chargeur (4) possédant un circuit démodulateur (69) pour la démodulation, avec lequel est également déterminé le courant (Iₜₓ) dans le module d'émission (6).

11. Procédé selon l'une des revendications 1 à 10,
le chargeur (4), en plus du convertisseur (54), possédant un circuit de référence de tension (72) afin de générer globalement une tension de conversion (V_{dd}) en dessous d'une tension de référence de rétroaction (V_{fb}) du convertisseur (54).

12. Procédé selon l'une des revendications 1 à 11,
le chargeur (4) possédant d'un accumulateur d'énergie d'urgence (88) afin de régler tout de même la tension intermédiaire en cas d'interruption de l'alimentation en énergie vers le chargeur (4).

13. Appareil (2) et chargeur (4), lesquels sont configurés pour mettre en œuvre un procédé selon l'une des revendications 1 à 12.

14. Appareil (2) et chargeur (4) selon la revendication 13,
l'appareil (2) étant réalisé sous la forme d'un appareil auditif.
